# EUROPÄISCHE PATENTANMELDUNG

(11) **EP 3 561 362 A2**
(43) Veröffentlichungstag der Anmeldung: **30.10.2019**
(21) Anmeldenummer: 19166675.9
(22) Anmeldetag: 02.04.2019
(51) Int. Cl.: F16L 41/08

(54) **ANSCHLUSSVORRICHTUNG**

(30) Priorität: 23.04.2018 DE 102018109685
(71) Anmelder: IT-Inno Tec GmbH, 65629 Niederneisen (DE)
(72) Erfinder:
(74) Vertreter: Blumbach · Zinngrebe Patentanwälte PartG mbB

(57) **Zusammenfassung**

Die Erfindung betrifft eine Anschlussvorrichtung für eine Nebenrohrleitung, die mit einer Öffnung in einer Hauptrohrleitung, eines Schachtes oder dergleichen zu verbinden ist. Die Anschlussvorrichtung ist gemäß der Erfindung dadurch gekennzeichnet, dass sie eine zwischen Anschlussstutzen und Elastomereinsatz eingebrachte Ringscheibe mit einer Öffnung aufweist, wobei der Anschlussstutzen sich durch die Öffnung der Ringscheibe erstreckt und der Anschlussstutzen die Ringscheibe von außen an den Anschlagsflansch des Elastomereinsatzes drückt und/oder dass der Anschlagsflansch des Elastomereinsatzes eine darin eingebrachte Kerbe aufweist, ein zu der Kerbe im Wesentlichen komplementär ausgebildetes Element zum Eingreifen in die Kerbe des Elastomereinsatzes eingerichtet ist und entweder an einem Anschlagsflansch des Anschlussstutzens, wobei dieser Anschlagsflansch zum Anliegen an dem Anschlagsflansch des Elastomereinsatzes oder an der Ringscheibe ausgebildet ist, oder an der Ringscheibe angeordnet ist, und/oder dass am Innenumfang des Anschlussstutzens wenigstens zwei umlaufende, axial voneinander beabstandete Dichtungen ausgebildet sind.

## Beschreibung

Die Erfindung bezieht sich auf eine Anschlussvorrichtung für eine Nebenrohrleitung, die mit einer Öffnung in einer Hauptrohrleitung, eines Schachtes, eines Gebäudes oder dergleichen zu verbinden ist.

Solche gattungsbildenden Anschlussvorrichtungen sind aus dem Stand der Technik bekannt, wobei beispielhaft auf die EP 0 795 712 A1, die DE 101 46 674 A1 und die DE 20 2006 005 685 U1 verwiesen wird.

Eine weitere Anschlussvorrichtung der gattungsbildenden Art ist in der DE 10 2017 122 786.5 mit Anmeldetag vom 29. September 2017 beschrieben.

Zumindest eine Aufgabe der vorliegenden Erfindung ist es, gegenüber dem vorbeschriebenen Stand der Technik eine Anschlussvorrichtung zu schaffen, welche nochmals verbesserte Abdichtungsoptionen bietet, und insbesondere auch ein Abdichten in einem nicht von einer Hauptrohrleitung, eines Schachtes, eines Gebäudes oder dergleichen umgebenen Bereichs der Anschlussvorrichtung ermöglicht. Weiterhin ist es eine Aufgabe der vorliegenden Erfindung, ein zu tiefes Einführen der Anschlussvorrichtung, insbesondere eines Anschlussstutzens, in die Öffnung einer Hauptrohrleitung oder dergleichen deutlich zu erschweren, wenn nicht sogar zu vermeiden.

Die gestellte Aufgabe wird durch einen Anschlussstutzen für eine gattungsgemäße Anschlussvorrichtung mit den Merkmalen nach Anspruch 1 sowie durch eine Anschlussvorrichtung mit den Merkmalen des Anspruchs 2 gelöst. Zweckmäßige Weiterbildungen sind Gegenstand der Unteransprüche.

Demgemäß geht die Lösung gemäß Erfindung aus von einer gattungsgemäßen Anschlussvorrichtung für eine Nebenrohrleitung, die mit einer Öffnung in einer Hauptrohrleitung, eines Schachtes oder dergleichen zu verbinden ist. Eine solche Anschlussvorrichtung umfasst einen hohlstopfenförmigen Elastomereinsatz, der einen an die Öffnung angepassten Außenumfang, einen ersten, einen Anschlagsflansch ausbildenden Bereich zur Anlage an der Außenwand der Hauptrohrleitung, des Schachtes, der Gebäudeöffnung oder dergleichen, einen Innenumfang und einen sich an den Anschlagsflansch anschließenden, sich in die Öffnung hinein erstreckenden Bereich, insbesondere als Kompressionsbereich ausgebildet, besitzt. Die Anschlussvorrichtung umfasst ferner einen Anschlussstutzen, der ein Eingriffsende mit Außenumfang zur Zusammenarbeit mit dem Innenumfang des Elastomereinsatzes sowie ein Muffenende oder einen Hohlraum mit einem Innenumfang zur Zusammenarbeit mit der Nebenrohrleitung besitzt, wobei der Innenumfang des Elastomereinsatzes wenigstens teilweise enger als der Außenumfang des Eingriffsendes des Anschlussstutzens ist. Die Lösung der Erfindung zeichnet sich hierbei insbesondere dadurch aus, dass die Anschlussvorrichtung ferner eine Ringscheibe mit einer Öffnung aufweist, welche zwischen Anschlussstutzen und Elastomereinsatz eingebracht ist, wobei der Anschlussstutzen sich durch die Öffnung der Ringscheibe erstreckt, so dass der Anschlussstutzen in Umfangsrichtung von der Ringscheibe umgeben ist und der Anschlussstutzen die Ringscheibe von außen an den Anschlagsflansch ausbildenden Bereich des Elastomereinsatzes drückt. Der Anschlussstutzen drückt die Ringscheibe somit von einem Bereich außerhalb der Anschlussvorrichtung aus in Richtung auf den Anschlagsflansch ausbildenden Bereich des Elastomereinsatzes. Dazu weist der Anschlussstutzen einen Bereich zur Druckausübung auf die Ringscheibe auf, welcher sich dadurch auszeichnet, dass der Außendurchmesser des Anschlussstutzens größer als der Innendurchmesser der Ringscheibe sein muss. Dieses Kriterium ermöglicht erst die Druckausübung des Anschlussstutzens auf die Ringscheibe, jedoch kann der Bereich des Anschlussstutzens zur Druckausübung auf die Ringscheibe darüberhinausgehend beliebig ausgebildet sein kann, und beispielsweise als Anschlagsflansch ausgestaltet sein.

Ein solcher zum Aufnehmen einer Ringscheibe ausgestalteter Anschlussstutzen bzw. eine Anschlussvorrichtung mit einer solchen Ringscheibe bietet den Vorteil, dass bereits im oberen Bereich des Elastomereinsatzes, d.h. im zum Anschlussstutzen hin gerichteten Bereich, eine frühe Kompression erzielt werden kann. Somit wird folglich eine frühe Abdichtung zwischen Elastomereinsatz und Öffnung der Hauptrohrleitung, aber auch zwischen Elastomereinsatz und Anschlussstutzen, bewirkt.

In Kombination oder alternativ dazu besitzt der Anschlussstutzen der Anschlussvorrichtung einen Anschlagsflansch, der zum Anliegen an dem Anschlagsflansch des Elastomereinsatzes und/oder im Falle einer zwischen Anschlussstutzen und Elastomereinsatz eingebrachten Ringscheibe zum Anliegen an dieser ausgebildet ist. Zudem weist der den Anschlagsflansch ausbildende Bereich des Elastomereinsatzes der Anschlussvorrichtung eine in den Anschlagsflansch ausbildenden Bereich eingebrachte Kerbe auf. Ein zu der Kerbe im Wesentlichen komplementär ausgebildetes Element ist an dem Anschlagsflansch des Anschlussstutzens oder an einer zwischen Anschlussstutzen und Elastomereinsatz eingebrachten Ringscheibe angeordnet und dazu eingerichtet, im montierten Zustand der Anschlussvorrichtung in die Kerbe einzugreifen.

Das in die Kerbe eingreifbare Element, ob an dem Anschlagsflansch des Anschlussstutzens oder an der Ringscheibe angeordnet, kann beispielsweise in Form eines Wulsts, oder allgemein in Form eines von dem Anschlagsflansch bzw. der Ringscheibe hervorstehenden Elements vorliegen, jedoch beispielsweise auch als abgewinkelter Endbereich bzw. abgewinkelter Kragen des Anschlagsflanschs bzw. der Ringscheibe vorliegen. Auch weitere Ausgestaltungsformen eines entsprechenden in die Kerbe eingreifbaren Elements sind denkbar.

Ebenso wie eine zwischen Anschlussstutzen und Elastomereinsatz eingebrachte Ringscheibe ermöglicht ein solches in die Kerbe des Anschlagsflanschs des Elastomereinsatzes eingreifbares Element vorteilhafterweise eine frühe Abdichtung zwischen Elastomereinsatz und Öffnung der Hauptrohrleitung, aber auch zwischen Elastomereinsatz und Anschlussstutzen, d.h. ein Abdichten bereits am Eingang des Anschlussstutzens. Sowohl durch einen zunehmenden Innendruck in der Hauptrohrleitung als auch durch einen zunehmenden Außendruck auf den Anschlussstutzen in Richtung der Hauptrohrleitung wird der zwischen dem Außenumfang des Anschlussstutzens und der Kerbe angeordnete Teil des den Anschlagsflansch ausbildenden Bereichs des Elastomereinsatzes, und gegebenenfalls auch eine zwischen Anschlussstutzen und Elastomereinsatz eingebrachte Ringscheibe, gegen den Außenumfang des Anschlussstutzens gedrückt und somit komprimiert.

Ist das in die Kerbe eingreifbare Element beispielsweise als abgewinkelter Kragen eines Anschlagsflanschs des Anschlussstutzens oder einer Ringscheibe ausgebildet, so entsteht zwischen der Außenwand des Anschlussstutzens und der dem Anschlussstutzen zugewandten Fläche des abgewinkelten Kragens eine im Wesentlichen konische Nut. Diese konische Nut wird nach dem Einbringen des Anschlussstutzens in den Elastomereinsatz durch einen Teil des den Anschlagsflansch ausbildenden Bereich des Elastomereinsatzes ausgefüllt. Insbesondere durch einen zunehmenden Innen- oder auch Außendruck in der bzw. auf die Hauptrohrleitung wird der in der konischen Nut angeordnete Teil des Anschlagsflanschs des Elastomereinsatzes aufgrund der Konizität der Nut in Richtung des Anschlussstutzens gedrückt und zudem in der konischen Nut festgehalten bzw. fixiert. Dadurch erfolgt bereits außerhalb des eigentlichen Kompressionsbereichs des Elastomereinsatzes zwischen Hauptrohrleitung und Anschlussstutzen ein Abdichten des Anschlussstutzens gegen den Elastomereinsatz.

Die Kombination aus einer Kerbe am Anschlagsflansch des Elastomereinsatzes und einem in die Kerbe eingreifenden Element entsprechend der obigen Beschreibung ermöglicht somit ein gegenüber dem Stand der Technik verbessertes Abdichten des Anschlussstutzens gegen den Elastomereinsatz und auch des Elastomereinsatzes gegen die Öffnung der Hauptrohrleitung.

Neben einer verbesserten Abdichtung, insbesondere infolge eines Abdichtens bereits am Eingang des Anschlussstutzens zusätzlich zu einem Abdichten im eigentlichen Kompressionsbereich, wirken sowohl eine zwischen Anschlussstutzen und Elastomereinsatz eingebrachte Ringscheibe als auch ein in eine an dem Anschlagsflansch des Elastomereinsatzes eingebrachte Kerbe eingreifbares Element an dem Anschlagsflansch des Anschlussstutzens oder an der Ringscheibe einem zu tiefen Einbringen des Anschlussstutzens in eine Öffnung in der Hauptrohrleitung oder des Schachts entgegen. So kann durch beide zuvor beschriebenen Alternativen jeweils einzeln oder auch in Kombination miteinander deutlich erschwert, wenn nicht sogar verhindert werden, dass der Anschlussstutzen bei dessen Einbringen in den Elastomereinsatz, insbesondere unter Ausübung eines sehr großen Druckes, ungewollter Weise vollständig in den Elastomereinsatz oder sogar in die Öffnung hineingedrückt wird.

In Kombination oder alternativ dazu sind am Innenumfang des Anschlussstutzens wenigstens zwei umlaufende, axial voneinander beabstandete Dichtungen ausgebildet. Die zwei umlaufenden, axial voneinander beabstandeten Dichtungen können jeweils in einer eigenen im Anschlussstutzen innenliegend umlaufenden Nut eingebracht sein, jedoch auch in einer einzigen, entsprechend dimensionierten im Anschlussstutzen innenliegend umlaufenden Nut eingebracht und über einen ebenfalls umlaufenden, zwischen den Dichtungen angeordneten Verbindungssteg miteinander verbunden sein.

Zwei im Anschlussstutzen innenliegend axial voneinander beabstandete, umlaufende Dichtungen bieten als einen Vorteil, dass im Falle einer Undichtheit bei zusammengesetzter Anschlussvorrichtung, insbesondere auf einer Baustelle, zwischen beide Dichtungen, d.h. innerhalb eines vorgegebenen, und durch die Dichtungen begrenzten Bereichs, von außen ein Dichtungsmittel eingespritzt werden kann, und sich das Dichtungsmittel in Folge nur innerhalb des vorgegebenen, durch die Dichtungen begrenzten Bereichs ausbreiten und diesen Bereich dichtend auskleiden kann.

So kann die Anschlussvorrichtung und/oder der Anschlussstutzen eine Öffnung einerseits zum Einbringen einer Prüfeinrichtung zum Prüfen der Dichtheit der Anschlussvorrichtung und andererseits zum Einbringen einer Injektionseinrichtung zum Einbringen von Dichtmittel zum Herstellen der Dichtheit der Anschlussvorrichtung, und zwar jeweils zwischen Anschlussstutzen und Elastomereinsatz, und vorzugsweise auch zwischen Anschlussstutzen und einer anzuschließenden Nebenrohrleitung, sowie darüber hinaus auch eine solche Prüfeinrichtung und/oder eine solche Injektionseinrichtung an sich aufweisen. Eine derartige Öffnung kann beispielsweise zwischen den zwei am Innenumfang des Anschlussstutzens umlaufenden, axial voneinander beabstandet eingebrachten Dichtungen angeordnet sein.

Andererseits kann der Anschlussstutzen bei entsprechenden Dimensionierungen der beiden umlaufenden, axial voneinander beabstandeten Dichtungen auch größere Rohrtoleranzen aufnehmen. Ferner kann die zum Elastomereinsatz näher befindliche Dichtung auch zur dichtenden Anlage an kleineren Rohrdurchmessern und die vom Elastomereinsatz entferntere Dichtung zur dichtenden Anlage an größeren Rohrdurchmessern dimensioniert sein. Folglich kann in einem solchen Fall ein und derselbe Anschlussstutzen auch für den Anschluss verschiedener Nebenrohrleitungen mit unterschiedlichen Rohrdurchmessern gesetzt werden.

Vorzugsweise ist am Innenumfang des Teils des den Anschlagsflansch ausbildenden Bereichs des Elastomereinsatzes eine umlaufende Dichtung mit Kipplippen vorgesehen. Eine Dichtung mit Kipplippen hat ganz allgemein und unabhängig von deren Anordnung den Vorteil, dass durch ein Kippen der Dichtlippe einer solchen Dichtung eine größere Fläche zum Abdichten des Anschlussstutzens gegen den Elastomereinsatz zur Verfügung gestellt wird, als dies ohne ein Kippen einer Dichtlippe der Fall wäre. Auch schmiegt sich eine solche Kipplippe besser an die Geometrie des abzudichtenden Materials an. Zudem kann eine umlaufende Dichteinrichtung mit Kipplippen, insbesondere eine umlaufende Lippendichtung mit T-Profil, bei welcher sich von einem Dichtungssteg ausgehend und im Profil bzw. im Querschnitt betrachtet, zu zwei entgegen gesetzten Seiten hin jeweils eine Lippe erstreckt, verglichen mit einer Dichteinrichtung ohne Dichtlippen mit T-Profil einen größeren Innen- und Außendruck aufnehmen. Der auf die Kipplippen ausgeübte Druck führt zu einem Anpressen der Kipplippen auf das abzudichtende Material, welches einen Gegendruck auf die Kipplippen erzeugt, sodass die Kipplippen eine Kompression erfahren und die Dichtwirkung folglich verstärkt wird.

In ergänzender oder alternativer Weiterbildung der Anschlussvorrichtung und/oder des Anschlussstutzens besitzt das Muffenende oder der Hohlraum mit Innenumfang zur Zusammenarbeit mit der Nebenrohrleitung an dem zur Nebenrohrleitung hin gerichteten Ende einen Zapfenkranz mit einer Mehrzahl von umlaufend voneinander beabstandet angeordneten, sich jeweils axial in entgegengesetzter Richtung zum Elastomereinsatz ersteckenden Zapfen, wobei zumindest in einzelne Zapfen ein- oder zweiseitig und im Wesentlichen entlang des Innenumfang verlaufend ein Querschlitz und/oder eine Hinterschneidung eingearbeitet ist. Die Zapfen können somit insbesondere auch schwalbenschwanzförmig oder T-förmig ausgebildet sein.

In ergänzender oder alternativer Weiterbildung der Anschlussvorrichtung und/oder des Anschlussstutzens ist das Muffenende oder der Hohlraum mit Innenumfang zur Zusammenarbeit mit der Nebenrohrleitung an dem zur Nebenrohrleitung hin gerichteten Ende mit einem Gewinde, insbesondere Außengewinde, ausgebildet ist.

In ergänzender oder alternativer Weiterbildung der Anschlussvorrichtung und/oder des Anschlussstutzens Anschlussvorrichtung oder Anschlussstutzen ist ferner ein Deckel zum Verschließen des Muffenendes oder des Hohlraums mit Innenumfang zur Zusammenarbeit mit der Nebenrohrleitung umfasst.

In ergänzender Weiterbildung der Anschlussvorrichtung und/oder des Anschlussstutzens kann der Deckel ein Gewinde, insbesondere Innengewinde, besitzen und/oder der Deckel kann eine Mehrzahl von umlaufend voneinander beabstandet angeordneten, sich jeweils axial in Richtung des Elastomereinsatzes ersteckenden Zapfen oder eine Mehrzahl von umlaufend voneinander beabstandet angeordneten, sich jeweils radial nach innen oder außen ersteckenden Zapfen tragen, wobei zumindest in einzelne Zacken ein entlang dieses Innenumfangs verlaufender Querschlitz und/oder Hinterschneidung eingearbeitet ist.

Darüber hinaus kann der Deckel in ergänzender Weiterbildung der Anschlussvorrichtung und/oder des Anschlussstutzens auch ein gegen die Innenwand des Anschlussstutzens drückendes Rohrstück aufweisen. Vorzugsweise ist eine der zwei umlaufenden, axial voneinander beabstandeten Dichteinrichtungen, insbesondere eine Dichtung mit Kipplippen, zum Abdichten zwischen Rohrstück und Anschlussstutzen zwischen der Außenwand des Rohrstücks und der Innenwand des Anschlussstutzens angeordnet. Nach Montage des Deckels auf den Anschlussstutzen befindet sich ein solches Rohrstück innerhalb des Anschlussstutzens und umgibt, im Falle einer in dem Anschlussstutzen eingebrachten Nebenrohrleitung, diese Nebenrohrleitung in Umfangsrichtung. Das Rohrstück kann an dessen Außenwand ein Außengewinde und der Anschlussstutzen kann an dessen Muffenende ein Innengewinde zum Verschrauben miteinander besitzen.

In ergänzender oder alternativer Weiterbildung der Anschlussvorrichtung und/oder des Anschlussstutzens ist am Innenumfang des Elastomereinsatzes und/oder am Außenumfang des Anschlussstutzens jeweils ein Gewinde ausgebildet.

In ergänzender oder alternativer Weiterbildung der Anschlussvorrichtung und/oder des Anschlussstutzens ist am Außenumfang des Anschlussstutzens ein Gewinde ausgebildet ist, welches partiell unterbrochen ist und/oder eine sich über einzelne Gewindegänge ändernde Steigung und/oder Zahnhöhe aufweist.

In ergänzender oder alternativer Weiterbildung der Anschlussvorrichtung und/oder des Anschlussstutzens ist am Außenumfang und/oder am Innenumfang des Elastomereinsatzes der Anschlussvorrichtung zumindest eine umlaufende Quelldichtung ausgebildet, welche ein Elastomer mit einem darin eingebetteten quellfähigen Material aufweist. Die Quelldichtung besteht somit aus zwei Komponenten, nämlich einem Elastomer, beispielsweise Zellgummi, und einem quellfähigen Material, und ist in einer an der Innenwand und/oder Außenwand des Elastomereinsatzes angeordneten Nut eingebracht. Dabei kleidet ein Elastomer vorzugsweise den an der Innenwand und/oder Außenwand des Elastomereinsatzes liegenden Bereich der Nut vollständig aus und umschließt das quellfähige Material im inneren Bereich der Nut, sodass das quellfähige Material von dem Elastomer eingebettet ist. Eine derart ausgestaltete Quelldichtung hat den Vorteil, dass an quellfähigem Material gespart werden kann. Aufgrund der geringeren Menge an quellfähigem Material im Vergleich zu einer Quelldichtung gemäß dem Stand der Technik mit quellfähigem Material als einziger Komponente wird ein schnelleres Aufquellen des quellfähigen Materials und folglich ein schnelleres Abdichten erzielt.

In ergänzender oder alternativer Weiterbildung der Anschlussvorrichtung und/oder des Anschlussstutzens, ist der Innenumfang des Elastomereinsatzes und/oder der Außenumfang des Anschlussstutzens jeweils konisch ausgebildet.

In ergänzender oder alternativer Weiterbildung der Anschlussvorrichtung und/oder des Anschlussstutzens weist der Anschlussstutzen in einem Bereich des Muffenendes oder Hohlraums mit einer im Wesentlichen zylinderförmigen Innenwand zur Aufnahme und Kopplung mit einer Nebenrohrleitung zudem eine Außenwand mit einer abschnittsweise kugelförmigen Außenwandung und einer abschnittsweise kugelförmigen Innenwandung sowie einen Hohlraum zwischen Innenwand und Außenwand auf, sodass die Innenwand des Anschlussstutzens gegenüber der Außenwand des Anschlussstutzens um zumindest zwei im Wesentlichen senkrecht zur Längsachse des Anschlussstutzens und senkrecht zueinander angeordneten Achsen verdrehbar ausgebildet ist. Eine derartige Ausbildung eines Anschlussstutzens mit einer Kugelgelenk-Kupplung für eine Nebenrohrleitung ermöglicht eine Abwinklung einer bereits von der Innenwand des Anschlussstutzens aufgenommenen Nebenrohrleitung innerhalb des Anschlussstutzens gegenüber der Längsachse des Anschlussstutzens und kann so beispielsweise ein unterschiedliches Setzungsverhalten von Hauptrohr und Nebenrohrleitung ausgleichen. Vorzugsweise besitzt der Anschlussstutzen an einem zur aufzunehmenden Nebenrohrleitung gerichteten Innenumfang der Innenwand zumindest zwei Dichteinrichtungen, insbesondere genau zwei als Dichtungen mit Kipplippen ausgestalteten Dichteinrichtungen, welche der Abdichtung des aufzunehmenden Nebenrohrleitung dienen. In einer Weiterbildung hierzu umfasst der Anschlussstutzen ferner einen von außen zugänglichen Anschluss, über welchen eine Dichtheitsprüfung zwischen den beiden Dichteinrichtungen, oder auch im Falle einer Undichtheit ein entsprechendes Material von außen in den Bereich zwischen den beiden Dichteinrichtungen injizierbar ist, um eine dichte Verbindung zu erreichen.

Weitere Merkmale und sich daraus ergebende Vorteile Wirkungen der Erfindung, welche nicht nur in der jeweils angegebenen Kombination, sondern auch in anderen Kombinationen oder in Alleinstellung verwendbar sind, ohne den Rahmen der vorliegenden Erfindung zu verlassen, werden aus der nachfolgenden Beschreibung von bevorzugten, jedoch lediglich beispielhaften Ausführungsformen anhand der beigefügten Zeichnungen ersichtlich. In den Zeichnungen zeigen:
Fig. 1 die Prinzipskizze einer zumindest teilweise aufgeschnittenen Ansicht einer ersten Ausführungsform einer Anschlussvorrichtung gemäß der Erfindung,
Fig. 2a, 2b die Prinzipskizze einer längsgeschnittenen Ansicht einer Ausführungsform eines Anschlussstutzens als solchen (Fig. 2a) und nach Einbringen des Anschlussstutzens in einen Elastomereinsatz (Fig. 2b) gemäß der Erfindung,
Fig. 2c die Prinzipskizze einer längsgeschnittenen Ansicht einer zu Fig. 2b alternativen Ausführungsform eines Anschlussstutzens nach Einbringen des Anschlussstutzens in einen Elastomereinsatz gemäß der Erfindung,
Fig. 3 die Prinzipskizze einer längsgeschnittenen Ansicht einer Ausführungsform eines Anschlussstutzens nach Einbringen des Anschlussstutzens in einen Elastomereinsatz gemäß der Erfindung,
Fig. 4 die Prinzipskizze einer längsgeschnittenen Ansicht einer Ausführungsform eines Anschlussstutzens gemäß der Erfindung,
Fig. 5 die Prinzipskizze einer längsgeschnittenen Ansicht einer weiteren Ausführungsform eines Anschlussstutzens gemäß der Erfindung,
Fig. 6 die Prinzipskizze einer weiteren Ausführungsform eines Anschlussstutzens gemäß der Erfindung
Fig. 7 die Prinzipskizze einer weiteren Ausführungsform eines Anschlussstutzens gemäß der Erfindung,
Fig. 8 die Prinzipskizze einer weiteren Ausführungsform einer Anschlussvorrichtung gemäß der Erfindung,
Fig. 9 die Prinzipskizze einer zumindest teilweise aufgeschnittenen Ansicht einer weiteren Ausführungsform einer Anschlussvorrichtung gemäß der Erfindung,
Fig. 10 die Prinzipskizze einer zumindest teilweise aufgeschnittenen Ansicht einer weiteren Ausführungsform einer Anschlussvorrichtung gemäß der Erfindung,
Fig. 11 die Prinzipskizze einer weiteren Ausführungsform eines Anschlussstutzens gemäß der Erfindung,
Fig. 12 die Prinzipskizze einer längsgeschnittenen Ansicht einer Ausführungsform eines Elastomereinsatzes einer Anschlussvorrichtung gemäß der Erfindung,
Fig. 13 die Prinzipskizze einer längsgeschnittenen Ansicht einer Ausführungsform eines Anschlussstutzens mit darin eingebrachter Nebenrohrleitung gemäß der Erfindung,
Fig. 14 die Prinzipskizze zweier längsgeschnittener Ansichten einer Ausführungsform eines Anschlussstutzens mit Kugelgelenk nach Einbringen des Anschlussstutzens in einen Elastomereinsatz gemäß der Erfindung.

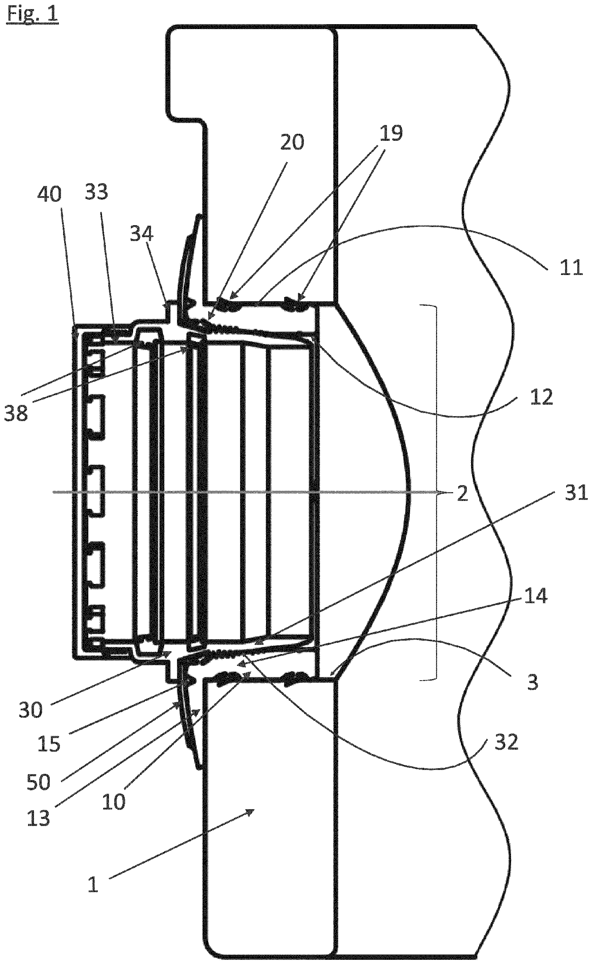

Fig. 1 zeigt als Prinzipskizze einen Ausschnitt aus einer Hauptrohrleitung 1, die mit einer nachträglichen Querbohrung oder Öffnung 2, nachfolgend auch als Rohrwand-Queröffnung bezeichnet, versehen ist. Die Öffnung könnte alternativ auch die Öffnung eines Schachtes oder dergleichen sein. Zur Bildung einer erfindungsgemäßen Anschlussvorrichtung für eine Nebenrohrleitung, die mit der Öffnung zu verbinden ist, ist ein hohlstopfenförmiger Elastomereinsatz 10 mit einem Außenumfang 11 und einem Innenumfang 12 in die Öffnung 2 eingesetzt, in welchen wiederum ein Anschlussstutzen 30, der ein Eingriffsende 31 mit Außenumfang 32 zur Zusammenarbeit mit dem Innenumfang 12 des Elastomereinsatzes 10 besitzt, eingesetzt ist. Hierzu können bevorzugt der Innenumfang des Elastomereinsatzes und/oder der Außenumfang des Anschlussstutzens jeweils konisch ausgebildet sein. Ferner weist der Anschlussstutzen 30 ein Muffenende oder einen Hohlraum zur Zusammenarbeit mit einer Nebenrohrleitung auf, die jedoch aus Gründen der Übersichtlichkeit fehlt und folglich nicht dargestellt ist. Bei der dargestellten Ausführungsform ist beispielhaft ein Muffenende 33 zu sehen. Der Außenumfang 11 des Elastomereinsatzes 10 ist an die Öffnung 2 angepasst und insbesondere derart bemessen, dass der Elastomereinsatz auch ohne eingeführten Anschlussstutzen 30 bereits einen Gleit- oder Presssitz mit der Öffnung eingeht. Der Elastomereinsatz 10 besitzt darüber hinaus einen Anschlagsflansch 13, insbesondere einen umlaufenden Anschlagsflansch, und einen sich an diesen Anschlagsflanschbereich anschließenden Bereich 14, der sich zweckmäßig als Kompressionsbereich in die Öffnung 2 hinein erstreckt.

Wie zu sehen, ist ferner der Innenumfang 12 des Elastomereinsatzes 10 wenigstens teilweise, insbesondere im sich in die Öffnung 2 erstreckenden Bereich, enger als der Außenumfang 32 des Eingriffsendes 31 des Anschlussstutzens 30. Der Anschlussstutzen ist bevorzugt in der Regel aus einem gegenüber dem Material des Elastomereinsatzes härteren Material, so dass folglich bei eingeführtem Anschlussstutzen 30 dieser den Elastomereinsatz 10 und insbesondere den zweckmäßig als Kompressionsbereich ausgebildeten, sich in die Öffnung 2 erstreckenden Bereich 14 gegen die Wandung 3, welche die Öffnung definiert, presst.

Wie ferner der Fig. 1 zu entnehmen, ist in bevorzugter Weiterbildung zusätzlich ein Deckel 40 vorgesehen, zum Verschließen des Muffenendes oder des Hohlraums mit Innenumfang zur Zusammenarbeit mit der Nebenrohrleitung, für den Fall, dass eine Verbindung mit einer Nebenrohrleitung gemäß Fig. 1 nicht oder noch nicht vorhanden ist. Ein solcher Deckel kann folglich nach dem Setzten der Anschlussvorrichtung in der Öffnung 2 dafür sorgen, dass beim Verfüllen des Grabens kein Schmutz etc. in die Anschlussvorrichtung fällt. So werden in einigen Fällen, z.B. bei Neubaugebieten, die Anschlussvorrichtungen zunächst gesetzt, d.h. Öffnungen in entsprechenden Rohren, Schachten oder dergleichen bereitgestellt, in diese ein hohlstopfenförmiger Elastomereinsatz und anschließend in diesen ein Anschlussstutzen eingesetzt, und die Verbindung zu einer Nebenrohrleitung erst zu einem späteren Zeitpunkt hergestellt wird.

Gemäß Erfindung ist das Material des den Anschlagsflansch 13 ausbildenden Bereichs des Elastomereinsatzes 10 bevorzugt gegenüber dem Material des sich in die Öffnung 2 erstreckenden Bereichs 14 härter, welches in Folge einen verbesserten und insbesondere definierten Sitz des Elastomereinsatzes 10 insgesamt in der Öffnung sicherstellt und also auch einem Verrutschen des Elastomereinsatzes 10 beim Einführen des Anschlussstutzens 30 effektiv entgegenwirkt. Es hat sich als zweckmäßig erwiesen, dass das Material, aus dem der Anschlagsflansch 13 gebildet ist, beispielsweise eine Härte von 60-80 Shore-A besitzt, wohingegen der des Kompressionsbereichs 14, beispielsweise eine Shore-A Härte von etwa 40-60 besitzt. In den Anschlagsflansch 13 kann gemäß bevorzugter Weiterbildung ferner eine Kerbe 15 eingebracht sein, so dass sich der Anschlagsflansch leichter an die Außenwand der Hauptrohrleitung, z.B. eines Betonrohres, des Schachtes oder dergleichen anlegt und sich der Außenwandkontur besser anpassen kann.

Das Ausführungsbeispiel nach Fig. 1 zeigt ferner, dass zwischen Anschlussstutzen 30 und Elastomereinsatz 10 eine Ringscheibe 50 einbringbar ist. Der Anschlussstutzen 30 erstreckt sich hierbei durch die Öffnung der Ringscheibe 50, so dass der Anschlussstutzen 30 in Umfangsrichtung von der Ringscheibe 50 umgeben ist. Ferner besitzt der Anschlussstutzen 30 einen Bereich, welcher zum Drücken der aufgenommenen Ringscheibe 50 von außen an den Anschlagsflansch ausbildenden Bereich 13 des Elastomereinsatzes 10, d.h. außerhalb der Anschlussvorrichtung in Richtung auf diesen Anschlagsflansch ausbildenden Bereich 13, eingerichtet ist. Der Bereich des Anschlussstutzens 30 zur Druckausübung auf die Ringscheibe 50 ist dadurch charakterisiert, dass der Außendurchmesser 32 des Anschlussstutzens 30 größer sein muss als der Innendurchmesser der Ringscheibe 50. So kann der besagte Bereich des Anschlussstutzens 30, wie in Fig. 1 gezeigt, beispielsweise als Anschlagsflansch 34 ausgebildet sein, jedoch sind auch weitere Ausführungsformen möglich.

Von Vorteil ist, dass eine solche Ringscheibe 50 zweckmäßig entsprechend dem jeweiligen Radius verschiedener Hauptrohleitungen 1 angepasst bzw. ausgewählt werden kann. Beim Einsetzen des Anschlussstutzens 30 in den Elastomereinsatz 10 wird dieser somit verpresst und kann in Folge eine wesentlich frühzeitigere Kompression des den Anschlagflansch bildenden Bereichs 13 und auch des sich in die Öffnung 2 erstreckenden Bereichs 14 bewirken. Insbesondere im oberen Bereich des Elastomereinsatzes 10, d.h. im zum Anschlussstutzen 30 hin gerichteten Bereich, kann hierdurch eine entsprechend frühe Kompression erzielt werden, die folglich auch eine frühe Abdichtung zwischen Elastomereinsatz 10 und Öffnung 2 der Hauptrohrleitung 1 aber auch zwischen Elastomereinsatz 10 und Anschlussstutzen 30 bewirkt.

Zur Unterstützung der Presswirkung auf den einen Anschlagsflansch ausbildenden Bereich 13 des Elastomereinsatzes 10 kann zweckmäßig auch der Anschlussstutzen 30 einen, insbesondere umlaufenden Anschlagsflansch 34 besitzen, der bei einer vorbestimmten Einführtiefe auf dem Anschlagsflansch 13 des Elastomereinsatzes 10 zum Liegen kommt und/oder im Falle einer, wie bei Fig. 1 dargestellten, zusätzlich zwischen Anschlussstutzen 30 und Elastomereinsatz 10 eingebrachten Ringscheibe 50 zum Anliegen an dieser kommt und diese auf den Anschlagsflansch 13 des Elastomereinsatzes 10 drückt.

Der Anschlagsflansch 34 und bei bevorzugt eingebrachter Ringscheibe 50 auch diese, kann hierbei folglich zunächst auch als eine Einführbegrenzung des Anschlussstutzens 30 dienen. Bei eingebrachter Ringscheibe 50 tritt diese beim Einführen des Anschlussstutzens 30 folglich vor dem Anschlagsflansch 34 des Anschlussstutzens 30 frühzeitig in Kontakt mit dem Anschlagsflansch 13 des Elastomereinsatzes 10 und begrenzt zunächst das Einführen. Wird anschließend weiter Druck ausgeübt und der Anschlussstutzen 30 folglich nochmals tiefer in den Elastomereinsatz 10 eingetrieben, erwirkt dies somit eine noch frühzeitigere Kompressionsverstärkung des Elastomereinsatzes 10, insbesondere des Kompressionsbereiches, als ohne zusätzlich eingebrachter Ringscheibe 50.

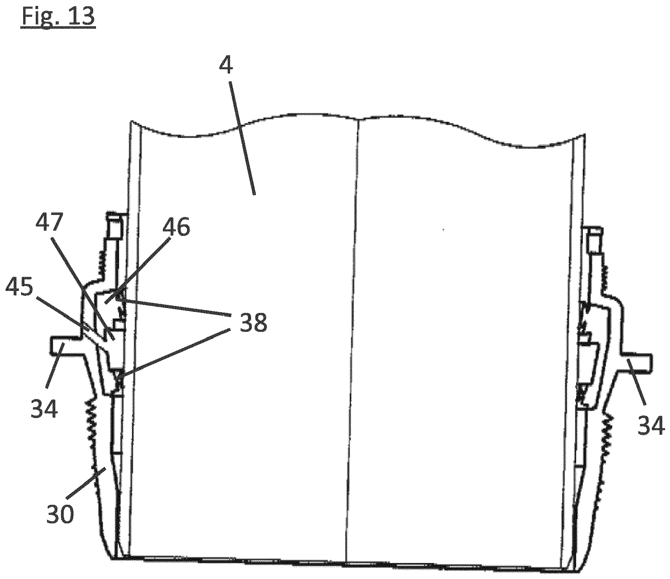

Wie bei der Ausführungsform nach Fig. 1 ferner dargestellt, sieht die Erfindung in ergänzender oder auch alternativer Ausführung die Ausbildung von wenigstens zwei am Innenumfang des Anschlussstutzens 30 umlaufenden, axial voneinander beabstandeten Dichtungen 38 vor. Diese Dichtungen 38 können, wie in Fig. 1 dargestellt, jeweils in einer eigenen im Anschlussstutzen 30 innenliegend umlaufenden Nut eingebracht sein. Alternativ dazu können diese Dichtungen 38 jedoch auch in einer einzigen, entsprechend dimensionierten im Anschlussstutzen 30 innenliegend umlaufenden Nut 46 eingebracht und über einen ebenfalls umlaufenden, zwischen den Dichtungen 38 angeordneten Verbindungssteg 47 miteinander verbunden sein, wie dies in Fig. 13 gezeigt ist, bei welcher eine Nebenrohrleitung 4 in den Anschlussstutzen 30 eingebracht ist.

Durch die zwei umlaufenden Dichtungen 38 lassen sich zum einen größere Rohrtoleranzen bei noch dichtender Anlage der Dichtungen 38 an einer angeschlossenen Nebenrohrleitung abfangen. Auch kann im Falle einer sich einstellenden Undichtheit, z.B. direkt auf der Baustelle, von außen ein zusätzliches Dichtungsmaterial zwischen diese Dichtungen 38 eingespritzt werden, welches den durch die Dichtungen 38 begrenzten Raum dichtend ausfüllt. Einem "Verlaufen" eines solchen nachträglich eingespritzten Dichtungsmaterials hin zu unerwünschten und/oder für eine Dichtwirkung ungeeigneten Bereichen kann folglich effektiv entgegengewirkt werden.

Durch die beiden am Innenumfang des Anschlussstutzens 30 umlaufenden, axialen voneinander beabstandet eingebrachten Dichtungen 38, kann beispielsweise durch eine von außen, eingebrachte Prüfeinrichtung, z.B. ein Ventil oder ein anderweitiger entsprechend geeigneter Anschluss, insbesondere durch eine zwischen diesen beiden Dichtungen 38 angeordnete Öffnung 45, wie beispielhaft in Fig. 13 gezeigt, auch die Dichtheit des fertiggestellten Anschlusses geprüft werden. Somit ist eine Prüfung an der gesamten Rohrleitung nicht erforderlich. Sollte eine Undichtheit festgestellt werden, kann z.B. an der Nebenrohrleitung 4 oder sonstigem Anschluss, eine Injektionseinrichtung am Anschlussstutzen 30 angebracht werden oder sein, insbesondere durch eine solche zwischen diesen beiden Dichtungen 38 angeordnete Öffnung 45, wie in Fig. 13 gezeigt, um mit einer Injektion, d.h. dem Einbringen von Dichtmittel, die Dichtheit und in Folge eine funktionsfähige Anschlussvorrichtung herzustellen. Es sei darauf hingewiesen, dass aus Gründen der Übersichtlichkeit auf die Darstellung derartiger Prüf- und Injektionseinrichtungen verzichtet worden ist.

Andererseits können diese axial voneinander beabstandeten, innen am Innenumfang des Anschlussstutzens umlaufenden Dichtungen 38 auch jeweils im Vorhinein auf verschiedene Rohrdurchmesser abgestimmt bzw. entsprechend dimensioniert sein. Um beispielsweise ein und denselben Anschlussstutzen 30 oder Typus von Anschlussstutzen 30 zur Steigerung dessen flexibler Einsatzfähigkeit für eine Mehrzahl und Nebenrohrleitungen mit unterschiedlichen Rohrdurchmesser nutzen zu können, können bevorzugt Dichtungen, die näher zum Elastomereinsatz hin angeordnet sind zur dichtenden Aufnahme für kleinere Durchmesser ausgebildet sein und eine Dichtung, die zum Muffenende 33 hingewandt ist, generell für einen größeren Rohrdurchmesser zum Anschluss vorgesehen sein.

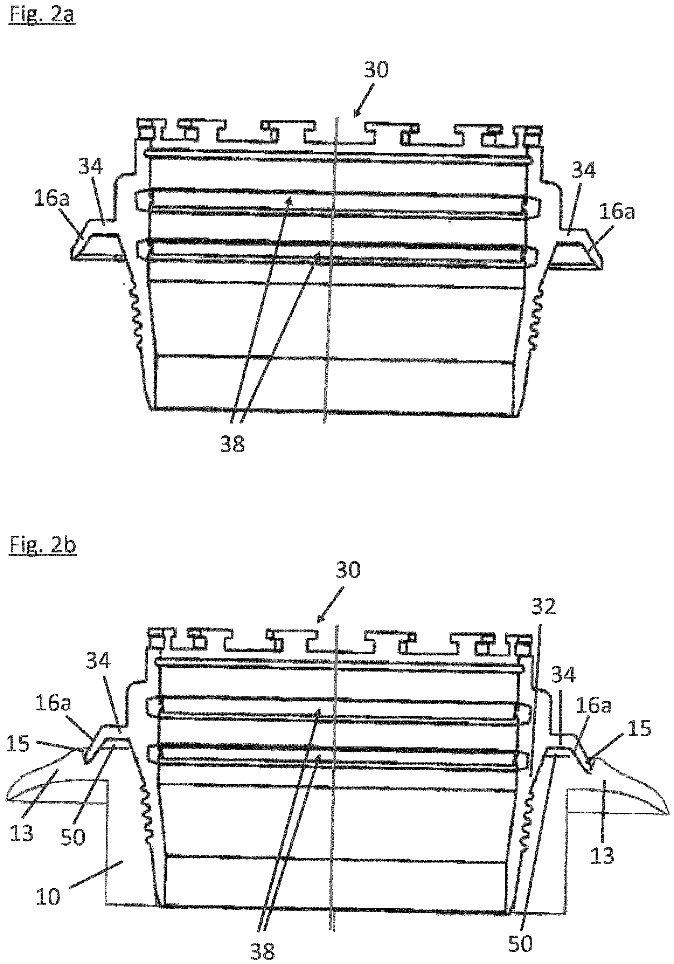

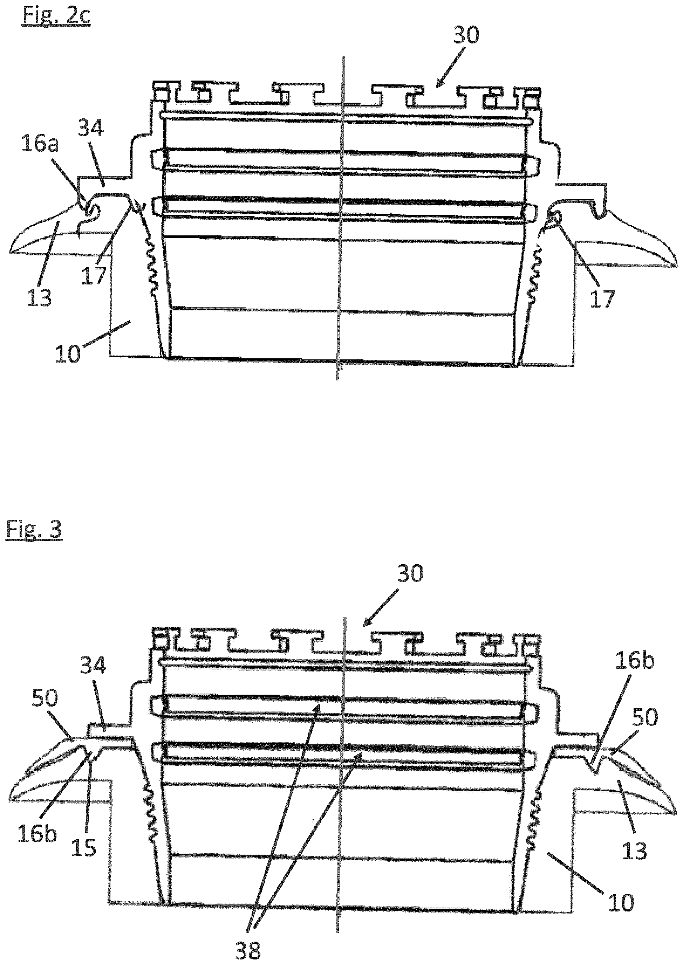

Figur 2a zeigt einen Längsschnitt durch eine Ausführungsform eines Anschlussstutzens 30 mit zwei axial voneinander beabstandeten, innen am Innenumfang des Anschlussstutzens 30 umlaufenden Dichtungen 38 und mit einem Anschlagsflansch 34. Der Anschlagsflansch 34 weist an dessen Außenbereich einen zu dem nicht dargestellten Hauptleitungsrohr hin abgewinkelten Kragen 16a auf. Der abgewinkelte Kragen 16a des Anschlagsflanschs 34 ist als ein in eine Kerbe eingreifendes Element 16a ausgestaltet. Wie aus Figur 2b hervorgeht, welche den Anschlussstutzen 30 gemäß Figur 2a nach Einbringen des Anschlussstutzens 30 in einen Elastomereinsatz 10 darstellt, ist der abgewinkelte Kragen 16a des Anschlagsflanschs 34 des Anschlussstutzens 30 im Wesentlichen komplementär zu einer Kerbe 15 eines einen Anschlagsflansch ausbildenden Bereichs 13 eines Elastomereinsatzes 10 ausgebildet und greift in diese Kerbe 15 ein. Es sind jedoch auch weitere Ausführungsformen eines in die Kerbe 15 eingreifenden Elements 16a, welches an dem Anschlussstutzen 30 angeordnet ist, denkbar. So zeigt Figur 2c beispielhaft ein in die Kerbe 15 eingreifendes Element 16a, welches ebenfalls am Anschlagsflansch 34 des Anschlussstutzens 30 angeordnet ist und als Wulst 16a ausgestaltet ist, wobei der Wulst 16a im Wesentlichen komplementär zu der Kerbe 15 ausgebildet ist.

In der dargestellten Ausführungsform gemäß Fig. 2b ist zwischen Anschlussstutzen 30 und Elastomereinsatz 10 im Gegensatz zu Fig. 2c eine Ringscheibe 50 eingebracht. Der Anschlussstutzen 30 erstreckt sich durch die Öffnung der Ringscheibe 50. Die Ringscheibe 50 erstreckt sich in radialer Richtung in Fig. 2b bis zum abgewinkelten Kragen 16a des Anschlagsflanschs 34 des Anschlussstutzens 30, sodass die Ringscheibe 50 an deren Außenumfang von dem abgewinkelten Kragen 16a des Anschlagsflanschs 34 des Anschlussstutzens 30 umgeben ist. Der Anschlagsflansch 34 drückt die Ringscheibe 50 von außen an den Anschlagsflansch ausbildenden Bereich 13 des Elastomereinsatzes 10, d.h. von außerhalb des Anschlussstutzens 30 in Richtung auf den Anschlagsflansch 13 des Elastomereinsatzes 10. Der abgewinkelte Kragen 16a des Anschlagsflanschs 34 verstärkt noch die Druckausübung auf die Ringscheibe 50, sodass diese wiederum verstärkt gegen den den Anschlagsflansch ausbildenden Bereich 13 des Elastomereinsatzes 10 gedrückt wird. Sowohl durch einen zunehmenden Innendruck in der Hauptrohrleitung als auch durch einen zunehmenden Außendruck auf den Anschlussstutzen 30 in Richtung der Hauptrohrleitung wird die Ringscheibe 50 und auch der zwischen dem Außenumfang 32 des Anschlussstutzens 30 und dem abgewinkelten Kragen 16a angeordnete Teil des den Anschlagsflansch ausbildenden Bereichs 13 des Elastomereinsatzes 10 aufgrund der Geometrie des abgewinkelten Kragens 16a auf die Außenwand des Anschlussstutzens 30 gedrückt und somit komprimiert. Infolgedessen wird bereits außerhalb des Kompressionsbereichs des Elastomereinsatzes 10 zwischen Hauptrohrleitung und Anschlussstutzen 30 ein Abdichten des Anschlussstutzens 30 in dessen oberem Bereich gegen den Elastomereinsatz 10 ermöglicht, was zu einem gegenüber dem Stand der Technik deutlich verbesserten Abdichten der gesamten Anschlussvorrichtung beiträgt.

In einer weiteren, jedoch nicht dargestellten Ausführungsform ist denkbar, dass im Vergleich zu Fig. 2b keine Ringscheibe 50 zwischen Anschlussstutzen 30 und Elastomereinsatz 10 eingebracht ist. In diesem Fall entsteht zwischen der Außenwand des Anschlussstutzens 30 und der dem Anschlussstutzen 30 zugewandten Fläche des abgewinkelten Kragens 16a eine im Wesentlichen konische Nut (Fig. 2a). Nach dem Einbringen des Anschlussstutzens 30 in den Elastomereinsatz 10 (Fig. 2b) wird diese konische Nut im Gegensatz zu Fig. 2b lediglich durch einen Teil des den Anschlagsflansch ausbildenden Bereich 13 des Elastomereinsatzes 10 ausgefüllt. Der in der konischen Nut angeordnete Teil des den Anschlagsflansch ausbildenden Bereichs 13 des Elastomereinsatzes 10 wird, wie oben beschrieben, insbesondere infolge eines zunehmenden Innendrucks in der Hauptrohrleitung oder Außendrucks auf die Hauptleitung aufgrund der Geometrie bzw. Konizität der Nut in Richtung der Außenwand des Anschlussstutzens 30 gedrückt. Somit erfolgt ebenfalls bereits außerhalb des eigentlichen Kompressionsbereichs des Elastomereinsatzes 10 zwischen Hauptrohrleitung und Anschlussstutzen 30 ein Abdichten des Anschlussstutzens 30 gegen den Elastomereinsatz 10.

Figur 3 zeigt eine alternative Ausführungsform zu Figur 2b und 2c, bei welcher ein in die Kerbe 15 des den Anschlagsflansch ausbildenden Bereichs 13 eines Elastomereinsatzes 10 eingreifendes Element 16b im Gegensatz zu Figuren 2b und 2c nicht an dem Anschlagsflansch 34 des Anschlussstutzens 30, sondern an einer Ringscheibe 50 ausgebildet ist. Die in Figur 3 dargestellte Ringscheibe 50 ist zwischen einem Anschlussflansch 34 eines Anschlussstutzen 30 und einem den Anschlagsflansch ausbildenden Bereichs 13 eines Elastomereinsatzes 10 eingebracht, wobei sich der Anschlussstutzen 30 durch die Öffnung der Ringscheibe 50 erstreckt. Die Ringscheibe 50 weist ein in Richtung des den Anschlagsflansch ausbildenden Bereichs 13 eines Elastomereinsatzes 10 hervorragendes Element 16b auf, welches beim Einbringen des Anschlussstutzens 30 in den Elastomereinsatz 10 in die darin eingebrachte Kerbe 15 eingreift. Das hervorstehende Element 16b der Ringscheibe 50 ist im Wesentlichen komplementär zu der Kerbe 15 ausgebildet und wird durch den ausgeübten Druck des Anschlussflansch 34 auf die Ringscheine 50 fest in der Kerbe 15 gehalten.

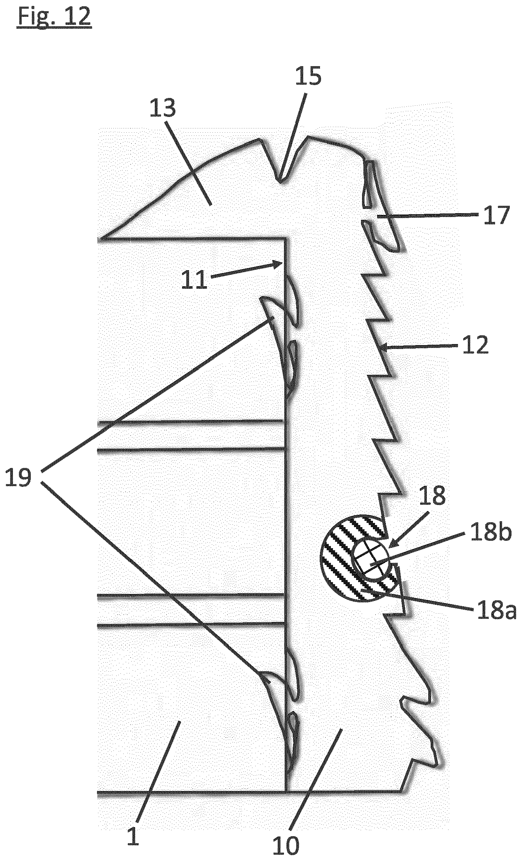

Neben einem bereits am Eingang des Anschlussstutzens 30 erfolgenden Abdichten des Anschlussstutzens 30 gegen den Elastomereinsatz 10 ist in den Ausführungsformen gemäß Figuren 2b, 2c und 3 weiterhin vorteilhaft, dass ein zu tiefes Einbringen bzw. Drücken des Anschlussstutzens 30 in den Elastomereinsatz 10 durch die Kombination einer Kerbe 15 in dem den Anschlagsflansch ausbildenden Bereich 13 des Elastomereinsatzes 10 und eines darin eingreifenden Elements 16a, 16b gegenüber dem Stand der Technik deutlich erschwert, wenn nicht sogar verhindert werden kann. Die maximale Einbringtiefe des Anschlussstutzens 30 in den Elastomereinsatz 10 ist somit sowohl durch eine zwischen Anschlussstutzen 30 und Elastomereinsatz 10 eingebrachte Ringscheibe 50 als solche als auch durch die Kombination aus Kerbe 15 und darin eingreifbarem Element 16 begrenzt. Zur weiteren Verbesserung einer Abdichtung bereits im oberen Bereich des Anschlussstutzens 30 kann am Innenumfang des den Anschlagsflansch ausbildenden Bereichs 13 des Elastomereinsatzes 10 eine umlaufende Dichteinrichtung 17, insbesondere eine Dichtung mit Kipplippen, vorgesehen sein, wie dies in Fign. 2c und 12 beispielhaft dargestellt ist. Eine umlaufende Dichteinrichtung mit Kipplippen hat ganz allgemein und unabhängig von deren Anbringung den Vorteil, dass durch ein Kippen der Dichtlippe infolge eines darauf ausgeübten Druckes eine größere Fläche zum Abdichten des Anschlussstutzens 30 gegen den Elastomereinsatz 10 zur Verfügung gestellt wird, als dies ohne ein Kippen einer Dichtlippe der Fall wäre. Auch schmiegt sich eine Kipplippe besser an die Geometrie des jeweils abzudichtenden Materials an. Zudem kann eine umlaufende Dichteinrichtung mit Kipplippen, insbesondere eine umlaufende Lippendichtung mit T-Profil, bei welcher sich von einem Dichtungssteg ausgehend und im Profil bzw. im Querschnitt betrachtet, zu zwei entgegen gesetzten Seiten hin jeweils eine Lippe erstreckt, verglichen mit einer Dichteinrichtung ohne Dichtlippen mit T-Profil einen größeren Innen- und Außendruck aufnehmen. Der auf die Kipplippen ausgeübte Druck führt zu einem Anpressen der Kipplippen auf das abzudichtende Material, welches einen Gegendruck auf die Kipplippen erzeugt, sodass die Kipplippen eine Kompression erfahren und die Dichtwirkung folglich verstärkt wird. Darüber hinaus kann eine solche Dichtung mit Kipplippen auch als Einführhilfe 20 fungieren.

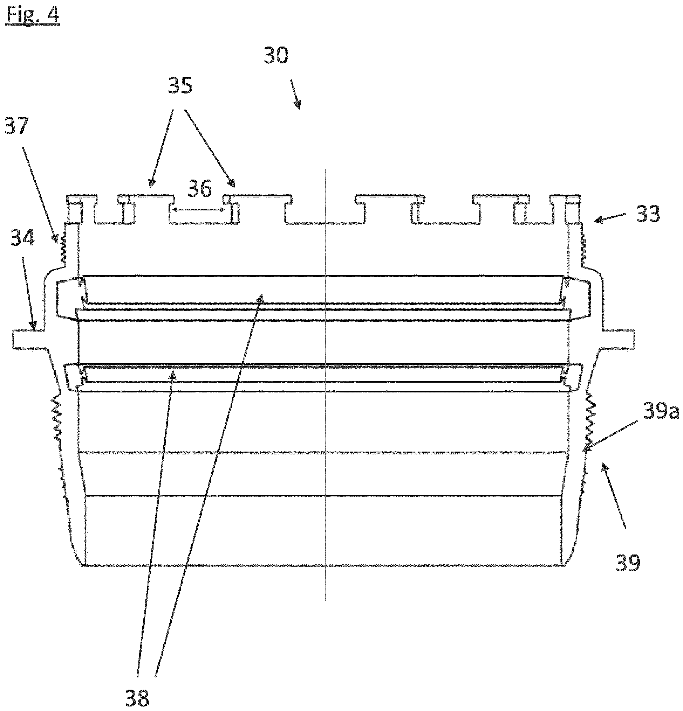

Bei der Prinzipskizze gemäß Fig. 4 betreffend einen Längsschnitt durch eine Ausführungsform eines Anschlussstutzens gemäß der Erfindung, sind zwei derartige innen am Innenumfang des Anschlussstutzens umlaufende, axial voneinander beabstandete Dichtungen 38, in dargestellter zweckmäßiger Ausgestaltung mit Kipplippen, gut zu sehen.

Solche Dichtungen 38 können folglich bei Einführung eines Rohres einer Nebenrohrleitung in den Anschlussstutzen 30 durch die in Richtung Innenwandung des Anschlussstutzens 30 ausgeübte Druckwirkung gesondert verpresst und/oder gequetscht werden, eine feste Einspannung des Rohres und in Folge sichere Abdichtung zwischen Anschlussstutzen 30 und angeschlossenem Rohres erfolgt. Derartige, gesondert ausgebildete Dichtungen 38 können in zweckmäßigen Ausgestaltungen als umlaufende Dichtungen mit Kipplippen ausgebildet sein, insbesondere als umlaufende Lippendichtungen mit T-Profil, d.h. als umlaufende Lippendichtungen, bei denen sich von einem Dichtungssteg ausgehend und im Profil bzw. im Querschnitt betrachtet, zu zwei entgegen gesetzten Seiten hin jeweils eine Lippe erstreckt. Solche, wie z.B. bei Fig. 4 als umlaufende Dichtlippen mit T-Profil skizzierte Dichtungen 38 ermöglichen ein Verkippen oder Verschwenken der vom Dichtungssteg sich beidseitig wegerstreckenden Lippen und erlauben somit eine Veränderung des Dichtprofils in dessen Stellung, Position und/oder Neigung in Bezug auf den Innenumfang des Anschlussstutzens beim Einführen eines Rohres, so dass sie sich dem Verlauf des Rohres anpassen und sich in Folge an das Rohr abdichtend anlegen.

Bei der in Fig. 4 gezeigten Ausführungsform ist ferner ein zweckmäßig am Außenumfang des Anschlussstutzens 30 ausgebildetes Gewinde 39 für eine verbesserte Führung beim Einsetzen des Anschlussstutzens 30 in einen Elastomereinsatz deutlich zu erkennen. Hierzu kann am Innenumfang des Elastomereinsatzes beispielsweise ein entsprechendes Gegengewinde vorgesehen sein.

Bei der in Fig. 4 skizzierten Ausführungsform ist jedoch bevorzugt ein als selbstgreifendes Gewinde ausgebildetes Gewinde 39 vorgesehen, welches folglich ohne Gegengewinde im Elastomereinsatz auskommen kann. Dieses kann ferner insbesondere partiell unterbrochen 39a sein und/oder eine sich über einzelne Gewindegänge ändernde, insbesondere eine von Gewindegang zu Gewindegang zunehmende Steigung und/oder Zahnhöhe aufweisen.

Aufgrund der partiellen Unterbrechung 39a des Gewindes, kann im Rahmen der Erfindung wieder eine partiell geschlossene Dichtebene am Außenumfang des Anschlussstutzens erwirkt werden und einer Umläufigkeit von Wasser über das Gewinde entgegengewirkt werden.

Eine Änderung der Steigung und/oder Zahnhöhe des Gewindes 39, insbesondere dergestalt, dass das Gewinde mit kleiner Steigung und Zahnhöhe beginnt und sich von Gewindegang zu Gewindegang in der Steigung und/oder Zahnhöhe ändert, ist für ein Verschrauben des Anschlussstutzens 30 im Elastomereinsatz, insbesondere im sich in die Öffnung erstreckenden Bereich des Elastomereinsatzes, ohne Gegengewinde zweckmäßig. Dadurch wird sichergestellt, dass das Gewinde 39 anfangs greift und beim weiteren Einschrauben durch die größer werdenden Zähne ausreichend verankert. Das Gewinde 39 kann parallel zur Schnittfläche verlaufen oder konisch, z.B. in einem Winkel von -10° bis +10°, wobei die Winkel des sich in die Öffnung erstreckenden Bereich des Elastomereinsatzes der durch das Außengewinde 39 definierten Schraubebene auch voneinander abweichen können, insbesondere, um beim Einschrauben eine kontinuierlich größere Verpressung zu erzielen.

Ferner ist bei der Ausführungsform nach Fig. 4 gezeigt, dass das Muffenende 33 der Anschlussvorrichtung oder der Hohlraum mit Innenumfang zur Zusammenarbeit mit der Nebenrohrleitung an dem zur Nebenrohrleitung hin gerichteten Ende einen Zapfenkranz mit einer Mehrzahl von umlaufend voneinander beabstandet angeordneten, sich jeweils axial in entgegengesetzter Richtung zum Elastomereinsatz ersteckenden, d.h. zur Nebenrohrleitung hin gerichtete, Zapfen 35 trägt, wobei zumindest in einzelne Zapfen ein-oder zweiseitig ein entlang dieses Innenumfangs verlaufender Querschlitz 36 oder alternativ eine entlang dieses Innenumfangs verlaufende Hinterschneidung eingearbeitet ist. Im dargestellten Beispiel ist in jeden Zapfen 35 zweiseitig ein entlang dieses Innenumfangs verlaufender Querschlitz 36 eingearbeitet und die Zapfen 35 sind in Folge entlang dieses Innenumfangs jeweils im Wesentlichen T-förmig ausgebildet.

Das Muffenende 33 oder der Hohlraum mit Innenumfang zur Zusammenarbeit mit der Nebenrohrleitung an dem zur Nebenrohrleitung hin gerichteten Ende kann ergänzend oder alternativ auch mit einem Gewinde 37, zweckmäßig ein Außengewinde, ausgebildet sein.

Ist das Muffenende 33 oder der Hohlraum mit Innenumfang zur Zusammenarbeit mit der Nebenrohrleitung an dem zur Nebenrohrleitung hin gerichteten Ende mit einem Gewinde 37 ausgebildet, kann beispielsweise ein wie bei Fig. 1. dargestellter Deckel 40 gleichermaßen mit einem Gewinde, allerdings mit einem Gegengewinde ausgebildet sein und folglich auf einfachste Weise mit dem Anschlussstutzen 30 verschraubt werden. Weist das Muffenende 33 oder der Hohlraum mit Innenumfang zur Zusammenarbeit mit der Nebenrohrleitung an dem zur Nebenrohrleitung hin gerichteten Ende ein Außengewinde auf und der Deckel 40 folglich ein Innengewinde, kann dieses ferner zweckmäßig innenliegend mit einem Deckelrand angeordnet sein, derart, dass der Deckelrand das Muffenende 33 oder den Hohlraum mit Innenumfang zur Zusammenarbeit mit der Nebenrohrleitung von außen gegen jegliches Eindringen von Schmutz oder anderen unerwünschten Umgebungsmaterialien vollständig umschließt, wie dies bei Fig. 1 skizziert ist.

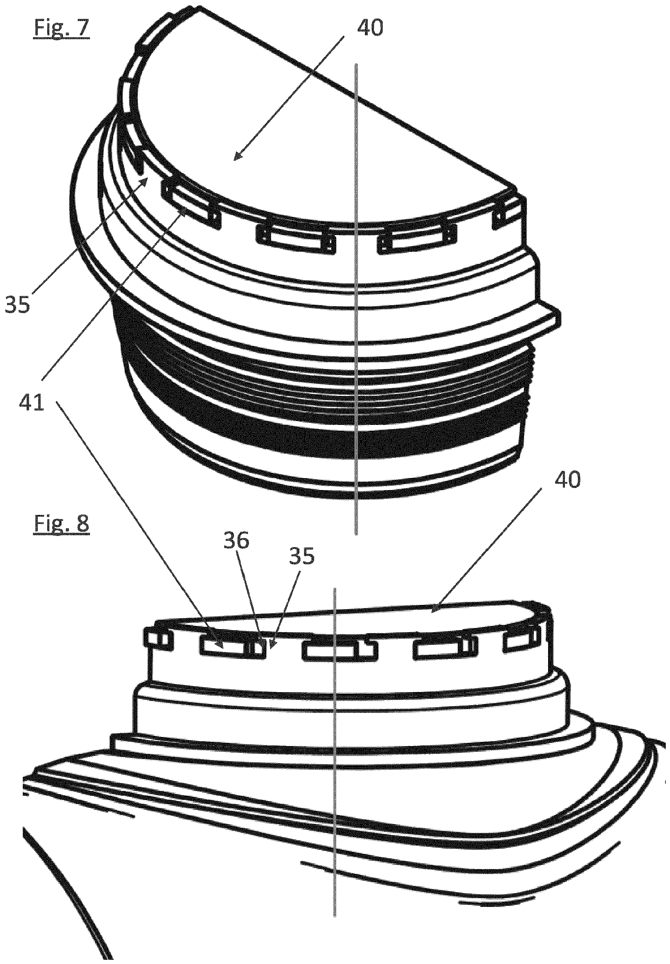

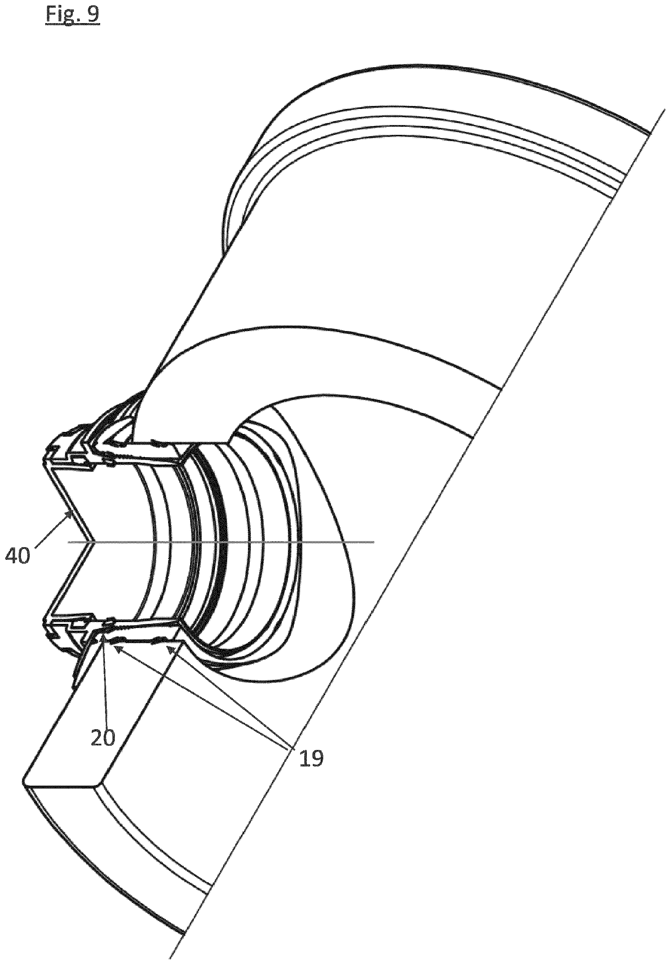

Ist das Muffenende 33 oder der Hohlraum mit Innenumfang zur Zusammenarbeit mit der Nebenrohrleitung an dem zur Nebenrohrleitung hin gerichteten Ende mit einem Zapfenkranz mit einer Mehrzahl von umlaufend voneinander beabstandet angeordneten, sich jeweils axial in entgegengesetzter Richtung zum Elastomereinsatz ersteckenden, d.h. zur Nebenrohrleitung hin gerichtete, Zapfen 35 ausgebildet, wobei zumindest in einzelne Zapfen ein- oder zweiseitig ein entlang dieses Innenumfangs verlaufender Querschlitz 36 oder eine entlang dieses Innenumfangs verlaufende Hinterschneidung eingearbeitet ist, kann ein solcher Deckel 40 ergänzend oder alternativ zu einem Gewinde zweckmäßig gleichermaßen eine Mehrzahl von komplementär ausgebildeten Zapfen 41 tragen. Derartige komplementär ausgebildete Zapfen 41 sind insbesondere umlaufend voneinander beabstandet angeordnet und erstrecken sich jeweils zweckmäßig entweder axial in Richtung des Elastomereinsatzes oder aber, wie bei Fign. 7 und 8 skizziert, jeweils radial nach innen oder nach außen, wobei zumindest in einzelne Zapfen wiederum in zweckmäßiger Weise ein- oder zweiseitig ein entlang dieses Innenumfangs verlaufender Querschlitz oder eine Hinterschneidung eingearbeitet ist. Bei den Fign. 7 und 8 erstrecken sich die Zapfen 41 radial nach außen, so dass der Deckel quasi im Innern des Muffenendes 33 oder des Hohlraums angeordnet ist. In diesem Fall, wie auch bei der Ausführungsform nach Fig. 9 zu erkennen, liegt ein eventueller Deckelrand gleichermaßen im Innern des Muffenendes 33 oder des Hohlraums. Erstrecken sich in alternativer, aus Gründen der Übersichtlichkeit nicht weiter dargestellten Ausführung die Zapfen 41 radial nach innen oder axial in Richtung des Elastomereinsatzes, so kann in weiterer zweckmäßiger Ausgestaltung ein Deckel 40 mit entsprechendem Deckelrand das Muffenende 33 oder den Hohlraum mit Innenumfang zur Zusammenarbeit mit der Nebenrohrleitung wieder mittels des Deckelrandes von außen gegen jegliches Eindringen von Schmutz oder anderen unerwünschten Umgebungsmaterialien vollständig umschließen.

In jedem Fall sind die komplementär ausgebildeten Zapfen 41 in der Anzahl bevorzugt so bemessen und derart dimensioniert, dass für einen jeweiligen Zapfen 41 zumindest ein Querschlitz 36 zur Verfügung steht und sich ein jeweiliger Zapfen zweckmäßig durch einfaches Verdrehen des Deckels 40 jeweils in einen solchen Querschlitz 36 eingreifen kann. Der Zapfenkranz und die am Deckel ausgebildeten Zapfen bilden somit zweckmäßige zusammenwirkende Verrastungsmittel. Hierdurch lässt sich folglich insbesondere auch eine Art Bajonettverzahnung realisieren.

Ist das Muffenende 33 oder der Hohlraum mit Innenumfang zur Zusammenarbeit mit der Nebenrohrleitung an dem zur Nebenrohrleitung hin gerichteten Ende mit einem Zapfenkranz ausgebildet, mit einer Mehrzahl von umlaufend voneinander beabstandet angeordneten, sich jeweils axial ersteckenden, zur Nebenrohrleitung hin gerichteten Zapfen 35, wobei zumindest in einzelne Zapfen ein- oder zweiseitig ein entlang dieses Innenumfangs verlaufender Querschlitz 36 eingearbeitet ist, bietet dies ferner den Vorteil, dass das Einfügen eines Montagewerkzeuges, insbesondere -schlüssels, erleichtert wird und, dass verhindert wird, dass sich das Montagewerkzeug beim Einschrauben des Stutzens von dem Zapfenkranz unerwünscht lösen kann. Denn es hat sich gezeigt, dass speziell in engen Rohrgräben es häufiger vorkommt, dass der Anschlussstutzen nicht sauber eingeschraubt werden kann, da das Montagewerkzeug abrutscht. Auch diesbezüglich kann folglich der Zapfenkranz als zweckmäßiges Verrastungsmittel dienen.

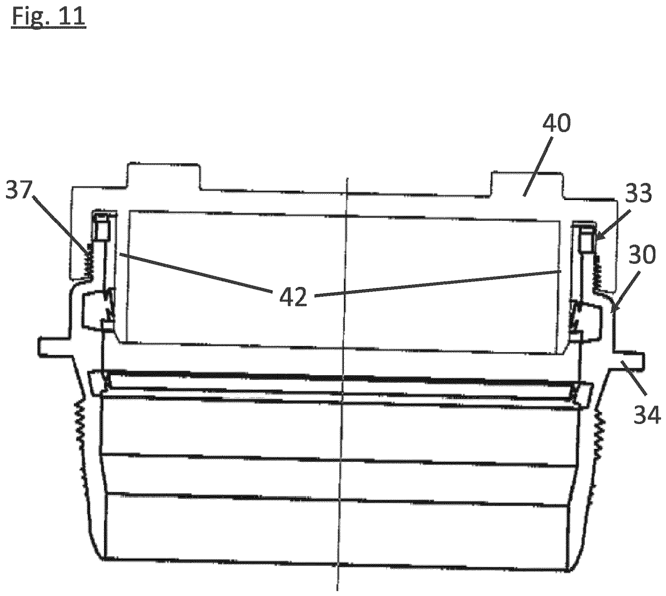

Wie in Figur 11 dargestellt, kann der Deckel 40 zusätzlich zu einem Deckelrand zum Umschließen des Muffenendes 33 oder des Hohlraums mit Innenumfang zur Zusammenarbeit mit der Nebenrohrleitung ein gegen die Innenwand des Anschlussstutzens 30 drückendes Rohrstück 42 aufweisen. Vorzugsweise ist eine der zwei umlaufenden, axial voneinander beabstandeten Dichteinrichtungen 38, insbesondere eine Dichtung mit Kipplippen, zum Abdichten zwischen Rohrstück 42 und Anschlussstutzen 30 zwischen der Außenwand des Rohrstücks 42 und der Innenwand des Anschlussstutzens 30 angeordnet. Nach Montage des Deckels 40 auf den Anschlussstutzen 30 befindet sich ein solches Rohrstück 42 des Deckels 40 innerhalb des Anschlussstutzens 30 und umgibt, im Falle einer in dem Anschlussstutzen 30 eingebrachten Nebenrohrleitung, diese Nebenrohrleitung in Umfangsrichtung. Das Rohrstück 42 kann an dessen Außenwand ein Außengewinde und der Anschlussstutzen 30 kann an dessen Muffenende 33 ein Innengewinde zum Verschrauben miteinander besitzen, was jedoch nicht in Fig. 11 gezeigt ist.

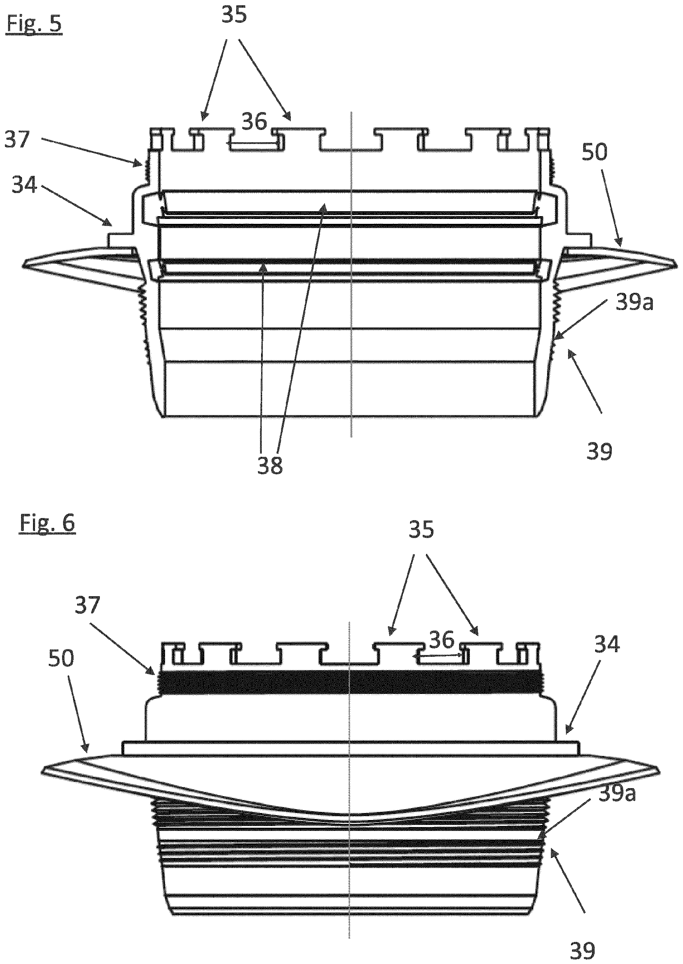

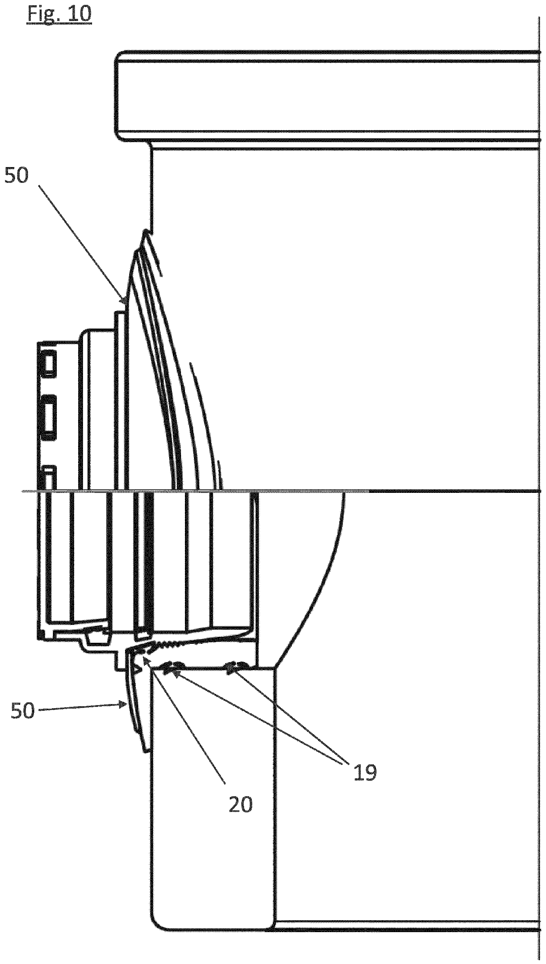

In Abwandlung zur Ausführungsform nach Fig. 4 zeigen die Ausführungsformen gemäß Fign. 5 und 6 insbesondere einen Anschlussstutzen 30, der ausgebildet ist, zum Aufnehmen einer Ringescheibe 50 derart, dass der Anschlussstutzen 30 sich durch die Öffnung der Ringscheibe 50 erstreckt, so dass der Anschlussstutzen 30 in Umfangsrichtung von der Ringscheibe 50 umgeben ist, und der Anschlussstutzen 30 einen Bereich besitzt, der, nach Einsetzen des Anschlussstutzens in einen Elastomereinsatz, zum Drücken der aufgenommenen Ringscheibe 50 von außen an einen Anschlagsflansch ausbildenden Bereich 13 des Elastomereinsatzes 10 eingerichtet ist, wie dies z.B. auch der Ausführungsform einer erfindungsgemäßen Anschlussvorrichtung nach Fig. 10 zu entnehmen ist. Ein solcher Bereich zum Ausüben von Druck auf die Ringscheibe 50 ist z.B. in den Fign.5 und 6 beispielhaft als Anschlagsflansch 34 ausgestaltet, kann aber auch anderweitig ausgebildet sein, solange er das Kriterium, dass der Außendurchmesser des Anschlussstutzens 30 größer ist als der Innendurchmesser der Ringscheibe 50, erfüllt. Von Vorteil ist, dass eine solche Ringscheibe 50, insbesondere in deren Form und/oder Wölbung, zweckmäßig entsprechend dem jeweiligen Radius verschiedener Hauptrohleitungen angepasst bzw. ausgewählt werden kann, wie dies beispielsweise in Fign. 6 und 10 stark vereinfacht skizziert dargestellt ist. Folglich führt dies insbesondere auch zu einer Vereinfachung einer optimalen Positionierung der Ringscheibe 50 und damit auch des durch die Ringscheibe 50 geführten Anschlussstutzens einer in der Öffnung einer Hauptrohrleitung eingesetzten Anschlussvorrichtung für eine Nebenrohrleitung.

Fig. 12 zeigt eine Ausführungsform eines Elastomereinsatzes 10 einer Anschlussvorrichtung, an dessen Innenumfang 11 eine umlaufende Quelldichtung 18 ausgebildet ist. Eine solche Quelldichtung 18 kann jedoch auch an dem Außenumfang 12 oder sowohl am Innenumfang 11 als auch am Außenumfang 12 des Elastomereinsatzes 10 ausgebildet sein, wobei der Elastomereinsatz 10 zudem auch eine Vielzahl von entsprechenden Quelldichtungen 18 aufweisen kann. Die in Fig. 12 dargestellte Quelldichtung 18 ist in einer an der Innenwand 11 des Elastomereinsatzes 10 angeordneten Nut eingebracht und besteht aus zwei Komponenten. Die erste Komponente ist ein Elastomer 18a und die zweite Komponente ist ein in dem Elastomer 18a eingebettetes quellfähiges Material 18b, beispielsweise Zellgummi. Wie in Fig. 12 zu sehen, kleidet das Elastomer 18a den an der Innenwand des Elastomereinsatzes 10 liegenden Bereich der Nut vollständig aus und umschließt das quellfähige Material 18b im inneren Bereich der Nut, sodass das quellfähige Material 18b von dem Elastomer 18a eingebettet ist. Eine derart ausgestaltete Quelldichtung 18 hat den großen Vorteil, dass an quellfähigem Material 18b gespart werden kann. Dies hat wiederum zur Folge, dass ein schnelleres Aufquellen des quellfähigen Materials 18b und folglich ein schnelleres Abdichten erzielt wird. Verschiedene Messreihen haben z.B. ein solches Abdichten bereits nach einer Quellzeit von ca. 30 bis 72 Stunden gezeigt.

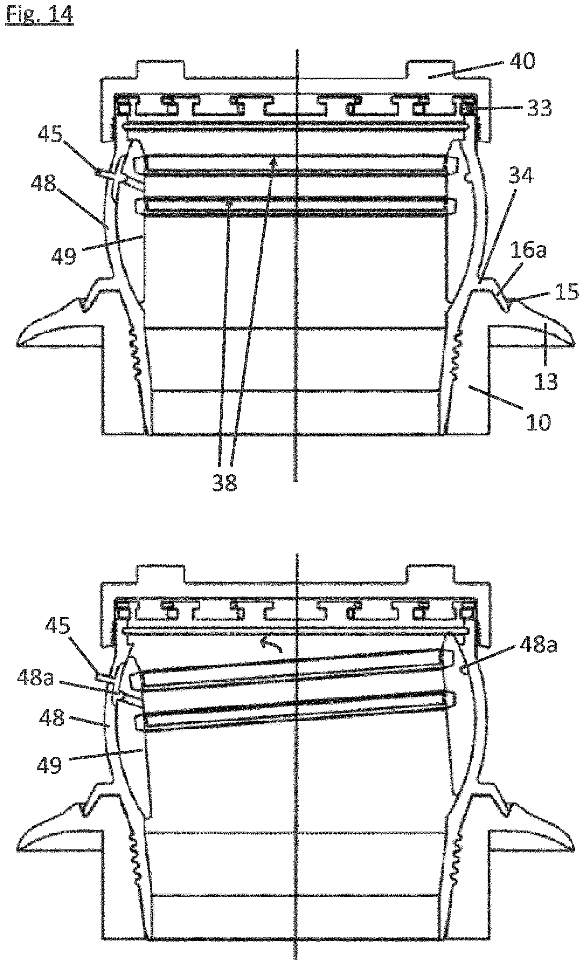

Gemäß einer Weiterbildung zeigt Fig. 14 in einer längsgeschnittenen Ansicht einer Anschlussvorrichtung eine Ausführungsform eines Anschlussstutzens 30 mit Kugelgelenk-Kupplung. Wie auch in Fig. 2b, hat der Anschlussstutzen 30 einen Anschlagsflansch 34 mit einem daran angeordneten vorstehenden Element 16a, welches gemäß Fig. 14 in eine an dem Anschlagsflansch 13 ausbildenden Bereich des Elastomereinsatzes 10 ausgebildete Kerbe 15 eingreift. Jedoch ist in der in Fig. 14 dargestellten Ausführungsform im Gegensatz zu Fig. 2b keine Ringscheibe zwischen dem Anschlagsflansch 34 des Anschlussstutzens 30 und dem den Anschlagsflansch ausbildenden Bereich 13 des Elastomereinsatzes 10 eingebracht. Das Einbringen einer solchen Ringscheibe gemäß Fig. 2b ist aber auch in Fig. 14 möglich und somit im Rahmen der Erfindung nicht ausgeschlossen.

Ferner umfasst der in Fig. 14 gezeigte Anschlussstutzen 30 in einem Bereich des Muffenendes 33 oder Hohlraums mit einer im Wesentlichen zylinderförmigen Innenwand 49 zur Aufnahme und Kopplung mit einer Nebenrohrleitung zudem eine Außenwand 48 mit einer abschnittsweise kugelförmigen Außenwandung und einer abschnittsweise kugelförmigen Innenwandung sowie einen Hohlraum zwischen Innenwand 49 und Außenwand 48 auf, sodass die Innenwand 49 des Anschlussstutzens 30 gegenüber der Außenwand 48 des Anschlussstutzens 30 um zumindest zwei im Wesentlichen senkrecht zur Längsachse des Anschlussstutzens 30 und senkrecht zueinander angeordneten Achsen verdrehbar ausgebildet ist. Eine derartige Ausbildung eines Anschlussstutzens 30 mit einer Kugelgelenk-Kupplung für eine Nebenrohrleitung ermöglicht eine Abwinklung einer bereits von der Innenwand 49 des Anschlussstutzens 30 aufgenommenen Nebenrohrleitung innerhalb des Anschlussstutzens 30 gegenüber der Längsachse des Anschlussstutzens 30 und kann so beispielsweise ein unterschiedliches Setzungsverhalten von Hauptrohr und Nebenrohrleitung ausgleichen.

Vorzugsweise besitzt der Anschlussstutzen 30 an einem zur aufzunehmenden Nebenrohrleitung gerichteten Innenumfang der Innenwand 48 zumindest zwei Dichteinrichtungen 38, insbesondere genau zwei als Dichtungen mit Kipplippen ausgestalteten Dichteinrichtungen 38, welche der Abdichtung des aufzunehmenden Nebenrohrleitung dienen.

In einer Weiterbildung hierzu ist an der Außenwand 48 des Anschlussstutzens 30 ferner eine Öffnung 45 für einen von außen zugänglichen Anschluss ausgebildet, wie in Fig. 14 beispielhaft dargestellt. Insbesondere ist an der Außenwand 48 des Anschlussstutzens 30 eine horizontale, umlaufende Nut 48a, an welcher zumindest an einer Stelle eine solche Öffnung 45 vorgesehen ist, ausgebildet. Von der Öffnung 45 erstreckt sich ein Kanal zu einer weiteren horizontalen, umlaufenden, jedoch an der Innenwand 49 des Anschlussstutzens 30 ausgebildeten Nut (der Übersichtlichkeit halber nicht in Fig. 14 dargestellt), welche zwischen den zwei Dichteinrichtungen 38 angeordnet ist, wobei vorzugsweise zumindest an einer Stelle dieser Nut ein Verbindungskanal von der Nut zu den beiden Dichteinrichtungen 38 ausgebildet ist. Die Nuten und Kanäle sind dabei allesamt derart angeordnet und ausgestaltet, dass auch beim Verdrehen der Innenwand 49 des Anschlussstutzens 30 gegenüber der Außenwand 48 des Anschlussstutzens 30 stets ein Durchgang von außen zu dem Verbindungskanal zwischen den beiden Dichteinrichtungen 38 zustande kommt. Somit kann die Dichtigkeit des Anschlussstutzens auch im Falle einer Ausführungsform mit Kugelgelenk-Kupplung durch einen von außen zugänglichen Anschluss zuverlässig überprüft werden, beispielsweise durch eine von außen eingebrachte Prüfeinrichtung, wie insbesondere bzgl. Fig. 13 erläutert. Zudem kann ein Dichtmittel, vorzugsweise ein quellfähiges Dichtmittel, mit Hilfe einer an dem Anschlussstutzen 30 angebrachten Injektionseinrichtung durch die Öffnung 45 in den sich daran anschließenden Kanal und insbesondere auch in den Verbindungskanal zwischen den beiden Dichteinrichtungen 38 eingespritzt werden, sodass der Anschlussstutzen 30 und auch das Kugelgelenk als solches im Falle einer Undichtheit bzw. eines Defekts nachträglich abgedichtet werden können.

Ergänzend kann insbesondere der Elastomereinsatz mit zusätzlichen, bereits in der DE 10 2017 122 786.5 mit Anmeldetag vom 29. September 2017 beschriebenen Merkmalen ausgestattet sein.

So können am Außenumfang 11 des Elastomereinsatzes zwei, insbesondere genau zwei umlaufende Dichteinrichtungen 19 (vgl. auch Fign. 1, 9 und 10) gesondert ausgebildet sein, die im Wesentlichen parallel zueinander verlaufen und insbesondere dafür bemessen und bestimmt sind, durchschnittene Stahlarmierungen bei der Rohrwand-Queröffnung einzukammern. Derartige Dichteinrichtungen 19 können bei Einführung des Eintrittsendes 31 des Anschlussstutzens 30 in den Elastomereinsatz 10 folglich durch die in Richtung Wandung 3 ausgeübte Druckwirkung gesondert verpresst und/oder gequetscht werden, wodurch an den umlaufenden Stellen der Dichteinrichtungen 19 eine feste Einspannung und in Folge sichere Abdichtung erfolgt. Solche Dichtungen sind daher insbesondere im Innen- und Außenbereich des Außenumfangs 11 des Elastomereinsatzes vorteilhaft (vgl. auch Fig. 9, 10). Derartige, gesondert ausgebildete Dichteinrichtungen 19 können wiederum in zweckmäßigen Ausgestaltungen als umlaufende Dichtungen mit Kipplippen ausgebildet sein, insbesondere als umlaufende Lippendichtungen mit T-Profil, d.h. als umlaufende Lippendichtungen, bei denen sich von einem Dichtungssteg ausgehend und im Profil bzw. im Querschnitt betrachtet, zu zwei entgegen gesetzten Seiten hin jeweils eine Lippe erstreckt, um ein Verkippen oder Verschwenken der vom Dichtungssteg sich beidseitig wegerstreckenden Lippen zu ermöglichen und somit eine Veränderung des Dichtprofils in dessen Stellung, Position und/oder Neigung in Bezug auf den Außenumfang beim Einführen des Elastomereinsatzes 10 in die Öffnung 2 zu erlauben, so dass sie sich dem Verlauf der Wandung 3 der Öffnung anpassen und sich in Folge an die Wandung abdichtend anlegen. Zudem können derartige umlaufende Lippendichtungen mit T-Profil verglichen mit Dichteinrichtungen ohne Dichtlippen mit T-Profil einen größeren Innen- und Außendruck aufnehmen. Der auf die Kipplippen ausgeübte Druck führt zu einem Anpressen der Kipplippen auf das abzudichtende Material, welches einen Gegendruck auf die Kipplippen erzeugt, sodass die Kipplippen eine Kompression erfahren und die Dichtwirkung folglich verstärkt wird. Auch kann ergänzend (vgl. Fign. 1, 9 und 10) eine solche umlaufende Dichtung mit Kipplippen auch als Einführhilfe 20 des Anschlussstutzens am Innenumfang 12 des Elastomereinsatzes ausgebildet sein. Um für den Anschlussstutzen 30 als Einführhilfe zu fungieren, eignet sich folglich insbesondere eine Stelle am Innenumfang 12, welche entweder noch im Bereich liegt, der den Anschlagsflansch 13 ausbildet oder am Anfang des sich daran anschließenden in die Öffnung 2 erstreckenden Bereichs, d.h. insbesondere des Kompressionsbereichs, im Wesentlichen an der, in Bezug auf den Anschlussstutzen einführungsseitigen Seite des Innenumfangs des Elastomereinsatzes.

### Bezugszeichenliste:

- 1: Hauptrohrleitung, Schacht oder dergleichen,
- 2: Öffnung bzw. Rohrwand-Queröffnung,
- 3: Wandung von Hauptrohrleitung, Schacht oder dergleichen,
- 4: Nebenrohrleitung,
- 10: hohlstopfenförmiger Elastomereinsatz,
- 11: Außenumfang des Elastomereinsatzes,
- 12: Innenumfang des Elastomereinsatzes,
- 13: Anschlagsflansch des Elastomereinsatzes,
- 14: sich in die Öffnung erstreckender, insbesondere als Kompressionsbereich ausgebildeter Bereich des Elastomereinsatzes,
- 15: Kerbe im Anschlagsflansch,
- 16a: am Anschlussstutzen angeordnetes, in Kerbe eingreifbares Element,
- 16a: an Ringscheibe angeordnetes, in Kerbe eingreifbares Element,
- 17: Dichteinrichtung im Innenbereich,
- 18: Quelldichtung,
- 18a: Elastomer,
- 18b: quellfähiges Material,
- 19: Dichteinrichtung, insbesondere im Innen- und Außenbereich
- 20: als Einführhilfe angeordnete, umlaufende Dichtung mit Kipplippen,
- 30: Anschlussstutzen,
- 31: Eingriffsende des Anschlussstutzens,
- 32: Außenumfang des Anschlussstutzens,
- 33: Muffenende des Anschlussstutzens,
- 34: Anschlagsflansch des Anschlussstutzens,
- 35: Kronenzapfen,
- 36: Querschlitze,
- 37: Gewinde, insbesondere Außengewinde
- 38: am Innenumfang umlaufende Dichtungen,
- 39: Gewinde am Anschlussstutzen,
- 39a: Gewindeunterbrechung,
- 40: Deckel,
- 41: Deckelzapfen,
- 42: innenliegendes Rohrstück des Deckels,
- 45: Öffnung,
- 46: große umlaufende Nut,
- 47: Verbindungssteg,
- 48: Außenwand des Anschlussstutzens mit Kugelgelenk,
- 48a: umlaufende Nut an Außenwand des Anschlussstutzens,
- 49: Innenwand des Anschlussstutzens mit Kugelgelenk,
- 50: Ringscheibe

## Patentansprüche

1. Anschlussvorrichtung für eine Nebenrohrleitung (4), die mit einer Öffnung (2) in einer Hauptrohrleitung (1), eines Schachtes, eines Gebäudes oder dergleichen zu verbinden ist,
mit
- einem hohlstopfenförmigen Elastomereinsatz (10), der einen an die Öffnung (2) angepassten Außenumfang (11), einen ersten, einen Anschlagsflansch (13) ausbildenden Bereich zur Anlage an der Außenwand der Hauptrohrleitung, des Schachtes oder dergleichen, einen Innenumfang (12) und einen sich an den Anschlagsflansch anschließenden, insbesondere als Kompressionsbereich ausgebildeten Bereich (14) besitzt, der sich in die Öffnung hinein erstreckt, und
- einem Anschlussstutzen (30), der ein Eingriffsende (31) mit Außenumfang (32) zur Zusammenarbeit mit dem Innenumfang des Elastomereinsatzes (10) sowie ein Muffenende (33) oder einen Hohlraum mit einem Innenumfang zur Zusammenarbeit mit der Nebenrohrleitung (4) besitzt, wobei der Innenumfang (12) des Elastomereinsatzes (10) wenigstens teilweise enger als der Außenumfang (32) des Eingriffsendes des Anschlussstutzens (30) ist,
**dadurch gekennzeichnet,**
- **dass** die Anschlussvorrichtung ferner eine Ringscheibe (50) mit einer Öffnung aufweist, welche zwischen Anschlussstutzen (30) und Elastomereinsatz (10) eingebracht ist, wobei der Anschlussstutzen (30) sich durch die Öffnung der Ringscheibe (50) erstreckt, so dass der Anschlussstutzen (30) in Umfangsrichtung von der Ringscheibe (50) umgeben ist, und der Anschlussstutzen (30) die Ringscheibe (50) von außen an den Anschlagsflansch ausbildenden Bereich (13) des Elastomereinsatzes (10) drückt und/oder
- **dass** der Anschlussstutzen (30) einen Anschlagsflansch (34) besitzt, ausgebildet zum Anliegen im montierten Zustand der Anschlussvorrichtung an dem Anschlagsflansch (13) des Elastomereinsatzes (10) und/oder im Falle einer zwischen Anschlussstutzen (30) und Elastomereinsatz (10) eingebrachten Ringscheibe (50) zum Anliegen an dieser, und/oder
- **dass** der den Anschlagsflansch ausbildende Bereich (13) des Elastomereinsatzes (10) eine in den Anschlagsflansch ausbildenden Bereich (13) eingebrachte Kerbe (15) aufweist und ein im Wesentlichen komplementär zu der Kerbe (15) ausgebildetes Element (16a, 16b) entweder an dem Anschlagsflansch (34) des Anschlussstutzens (30) oder im Falle einer zwischen Anschlussstutzen (30) und Elastomereinsatz (10) eingebrachten Ringscheibe (50) an dieser angeordnet ist, wobei das Element (16a, 16b) zum Eingreifen in die Kerbe (15) des Elastomereinsatzes (10) im montierten Zustand der Anschlussvorrichtung eingerichtet ist, und/oder
- **dass** am Innenumfang des Anschlussstutzens (30) wenigstens zwei umlaufende, axial voneinander beabstandete Dichtungen (38) ausgebildet sind.

2. Anschlussstutzen (30) für eine Anschlussvorrichtung für eine Nebenrohrleitung (4), die mit einer Öffnung (2) in einer Hauptrohrleitung (1), eines Schachtes, eines Gebäudes oder dergleichen zu verbinden ist, wobei der Anschlussstutzen (30) ein Muffenende (33) oder einen Hohlraum mit einem Innenumfang zur Zusammenarbeit mit der Nebenrohrleitung besitzt sowie ein Eingriffsende (31) mit Außenumfang (32), wobei der Außenumfang (32) zur Zusammenarbeit mit dem Innenumfang (12) eines hohlstopfenförmigen Elastomereinsatzes (10), welcher einen an die Öffnung (2) angepassten Außenumfang (11), einen ersten, einen Anschlagsflansch (13) ausbildenden Bereich zur Anlage an der Außenwand der Hauptrohrleitung (1), des Schachtes oder dergleichen, einen Innenumfang (12) und einen sich an den Anschlagsflansch (13) anschließenden, insbesondere als Kompressionsbereich ausgebildeten Bereich (14) besitzt, der sich in die Öffnung (2) hinein erstreckt, derart dimensioniert ist, dass der Innenumfang (12) des Elastomereinsatzes (10) wenigstens teilweise enger als der Außenumfang (32) des Eingriffsendes (31) des Anschlussstutzens (30) ist,
**dadurch gekennzeichnet,**
- **dass** der Anschlussstutzen (30) ausgebildet ist zum Aufnehmen einer Ringscheibe (50) mit einer Öffnung derart, dass der Anschlussstutzen (30) sich durch die Öffnung der Ringscheibe (50) erstreckt, so dass der Anschlussstutzen (30) in Umfangsrichtung von der Ringscheibe (50) umgeben ist, wobei der Anschlussstutzen (30) ferner einen Bereich besitzt, der zum Drücken der aufgenommenen Ringscheibe (50) von außen an den Anschlagsflansch ausbildenden Bereich (13) des Elastomereinsatzes (10) eingerichtet ist und/oder,
- **dass** der Anschlussstutzen (30) einen Anschlagsflansch (34) besitzt, ausgebildet zum Anliegen an dem Anschlagsflansch (13) des Elastomereinsatzes (10) und/oder im Falle einer vom Anschlussstutzen (30) aufzunehmenden, insbesondere zwischen Anschlussstutzen (30) und Elastomereinsatz (10) einzubringenden Ringscheibe (50) derart, dass der Anschlussstutzen (30) sich durch die Öffnung der Ringscheibe (50) erstreckt, zum Anliegen an der Ringscheibe (50), und/oder
- **dass** ein im Wesentlichen komplementär zu einer an dem Anschlagsflansch ausbildenden Bereich (13) des Elastomereinsatzes eingebrachten Kerbe (15) ausgebildetes Element (16a) an dem Anschlagsflansch (34) des Anschlussstutzens (30) angeordnet ist, zum Eingreifen in die Kerbe (15) nach Einbringen des Anschlussstutzens (30) in den Elastomereinsatz (10) und/oder
- **dass** am Innenumfang des Anschlussstutzens (30) wenigstens zwei umlaufende, axial voneinander beabstandete Dichtungen (38) ausgebildet sind.

3. Anschlussvorrichtung oder Anschlussstutzen (30) nach einem der vorstehenden Ansprüche, wobei das Muffenende (33) oder der Hohlraum mit Innenumfang zur Zusammenarbeit mit der Nebenrohrleitung (4) an dem zur Nebenrohrleitung (4) hin gerichteten Ende einen Zapfenkranz mit einer Mehrzahl von umlaufend voneinander beabstandet angeordneten, sich jeweils axial in entgegengesetzter Richtung zum Elastomereinsatz (10) ersteckenden Zapfen trägt, wobei zumindest in einzelne Zapfen (35) ein- oder zweiseitig und im Wesentlichen entlang des Innenumfangs verlaufend ein Querschlitz (36) und/oder eine Hinterschneidung eingearbeitet ist.

4. Anschlussvorrichtung oder Anschlussstutzen (30) nach einem der vorstehenden Ansprüche, wobei das Muffenende (33) oder der Hohlraum mit Innenumfang zur Zusammenarbeit mit der Nebenrohrleitung (4) an dem zur Nebenrohrleitung (4) hin gerichteten Ende mit einem Gewinde (37) insbesondere mit einem Gewinde (37), insbesondere einem Außengewinde, ausgebildet ist.

5. Anschlussvorrichtung oder Anschlussstutzen (30) nach einem der vorstehenden Ansprüche, wobei ferner ein Deckel (40) zum Verschließen des Muffenendes (33) oder des Hohlraums mit Innenumfang zur Zusammenarbeit mit der Nebenrohrleitung (4) umfasst ist.

6. Anschlussvorrichtung oder Anschlussstutzen (30) nach vorstehenden Anspruch, wobei der Deckel (40) ein Gewinde, insbesondere ein Innengewinde besitzt und/oder
wobei der Deckel (40) entweder eine Mehrzahl von umlaufend voneinander beabstandet angeordneten, sich jeweils axial in Richtung des Elastomereinsatzes (10) ersteckenden Zapfen (41) oder eine Mehrzahl von umlaufend voneinander beabstandet angeordneten, sich jeweils radial nach innen oder außen ersteckenden Zapfen (41) trägt, wobei insbesondere zumindest in einzelne Zapfen (41) ein- oder zweiseitig ein entlang dieses Innenumfangs verlaufender Querschlitz (36) und/oder eine entlang dieses Innenumfangs verlaufende Hinterschneidung eingearbeitet ist.

7. Anschlussvorrichtung oder Anschlussstutzen (30) nach einem der vorstehenden Ansprüche, wobei am Innenumfang (12) des Elastomereinsatzes (10) und/oder am Außenumfang (32) des Anschlussstutzens (30) jeweils ein Gewinde ausgebildet ist.

8. Anschlussvorrichtung oder Anschlussstutzen (30) nach einem der vorstehenden Ansprüche, wobei am Außenumfang (32) des Anschlussstutzens (30) ein Gewinde (39) ausgebildet ist, welches partiell unterbrochen (39a) ist und/oder eine sich über einzelne Gewindegänge ändernde Steigung und/oder Zahnhöhe aufweist.

9. Anschlussvorrichtung oder Anschlussstutzen (30) nach einem der vorstehenden Ansprüche, **dadurch gekennzeichnet, dass** am Außenumfang (11) und/oder am Innenumfang (12) des Elastomereinsatzes (10) zumindest eine umlaufende Quelldichtung (18) ausgebildet ist, wobei die Quelldichtung (18) als Elastomer (18a) mit darin eingebettetem quellfähigen Material (18b) ausgestaltet ist.

10. Anschlussvorrichtung oder Anschlussstutzen (30) nach einem der vorstehenden Ansprüche,
mit einer Öffnung (45) zum Einbringen einer Prüfeinrichtung zum Prüfen der Dichtheit der Anschlussvorrichtung zwischen Anschlussstutzen (30) und Elastomereinsatz (10), und insbesondere zwischen Anschlussstutzen (30) und einer anzuschließenden Nebenrohrleitung (4), und zum Einbringen einer Injektionseinrichtung zum Einbringen von Dichtmittel zum Herstellen der Dichtheit der Anschlussvorrichtung zwischen Anschlussstutzen (30) und Elastomereinsatz (10) und insbesondere zwischen Anschlussstutzen (30) und einer anzuschließenden Nebenrohrleitung (4).

11. Anschlussvorrichtung oder Anschlussstutzen (30) nach einem der vorstehenden Ansprüche,
mit einer Prüfeinrichtung zum Prüfen der Dichtheit der Anschlussvorrichtung zwischen Anschlussstutzen (30) und Elastomereinsatz (10), und insbesondere zwischen Anschlussstutzen (30) und einer anzuschließenden Nebenrohrleitung (4), und/oder mit einer Injektionseinrichtung zum Einbringen eines Dichtmittels zum Herstellen der Dichtheit der Anschlussvorrichtung zwischen Anschlussstutzen (30) und Elastomereinsatz (10) und insbesondere zwischen Anschlussstutzen (30) und einer anzuschließenden Nebenrohrleitung (4).

12. Anschlussvorrichtung oder Anschlussstutzen (30) nach einem der vorstehenden Ansprüche, **dadurch gekennzeichnet, dass** der Anschlussstutzen (30) in einem Bereich des Muffenendes (33) oder Hohlraums mit einer im Wesentlichen zylinderförmigen Innenwand zur Aufnahme und Kopplung mit einer Nebenrohrleitung zudem eine Außenwand mit einer abschnittsweise kugelförmigen Außenwandung und einer abschnittsweise kugelförmigen Innenwandung sowie einen Hohlraum zwischen Innenwand und Außenwand aufweist, sodass die Innenwand des Anschlussstutzens (30) gegenüber der Außenwand des Anschlussstutzens um zumindest zwei im Wesentlichen senkrecht zur Längsachse des Anschlussstutzens und senkrecht zueinander angeordneten Achsen verdrehbar ausgebildet ist, wobei der Anschlussstutzen (30) vorzugsweise an einem zur aufzunehmenden Nebenrohrleitung gerichteten Innenumfang der Innenwand zumindest zwei Dichteinrichtungen aufweist.
